# EUROPEAN PATENT APPLICATION

(11) **EP 4 825 513 A1**
(43) Date of publication of application: **21.10.2026**
(21) Application number: 24947810.8
(22) Date of filing: 16.10.2024
(51) Int. Cl.: B23F 23/12, B23Q 15/22, G01B 5/20, G05B 19/404

(54) **MACHINE TOOL, GEAR MEASUREMENT DEVICE, ERROR MEASUREMENT METHOD, GEAR PRODUCTION METHOD, AND COMPUTER PROGRAM**

(30) Priority: 17.07.2024 JP 2024114351
(71) Applicant: Yamazaki Mazak Corporation, Niwa-gun, Aichi 480-0197 (JP)
(72) Inventor: HAYASHI, Toshiki, Niwa-gun, Aichi 480-0197 (JP); YAMAMOTO, Yuki, Niwa-gun, Aichi 480-0197 (JP)
(74) Representative: TBK
(86) International application number: PCT/JP2024/036875
(87) International publication number: WO 2026/018461

(57) **Abstract**

A machine tool includes a machine control unit configured to execute an error measurement process comprising: controlling actuator to move the touch probe from an approach starting point in an approach direction; determining a center position of a tip ball of the touch probe when the touch probe is moved to contact a surface of the workpiece; determining a candidate value of an error between the gear shape and a target shape of a gear product; generating cross-sectional models representing cross-sectional shape of the tooth surface based on the candidate value, the target shape and the posture; obtaining a minimum distance between the cross-sectional model and the center position; and changing the candidate value to determine, as the error, candidate value at which an absolute value of a difference between the minimum distance and a radius of the tip ball is equal to or less than an allowable value.

## Description

### Technical Field

The present invention relates to a machine tool, a gear measuring device, an error measurement method, a gear manufacturing method, and a computer program.

### Background Art

In many gear manufacturing processes, it is common to roughly machine a workpiece into a gear shape by the machine tool, remove the workpiece from the machine tool, measure errors by a dedicated gear measuring device as described in Patent document 1, and reattach the workpiece to the machine tool based on the measurement result to perform finishing.

As a technique for solving such a problem, there is a machine tool as described in Patent Document 2. The machine tool according to Patent Document 2 machines a workpiece into a gear-shape, then measures errors using a touch probe mounted on the machine tool, and automates a series of operations from roughing to finishing.

### Prior Art Document

### Patent Documents

[Patent Document 1] Japanese Patent Application Publication No. 2006-234775 [Patent Document 2] Japanese Patent Application Laid-Open No. S61-070401

### SUMMARY

### Problems to be Solved by the Invention

In the machine tool of Patent Document 2, it is necessary to move the rigid ball at the tip of the touch probe until the rigid ball contacts both of the two teeth of the gear. Therefore, a touch probe having a rigid sphere corresponding to a gear shape should be selected.

The problem of the technology disclosed in the present application is to provide a technique capable of measuring an error by using a touch probe selected independently of the gear shape.

### Means for Solving the Problems

In accordance with a first aspect of the present disclosure, a machine tool includes a workpiece gripper, a tool gripper, an actuator, and a machine control unit. The workpiece gripper is configured to grip the workpiece. A tool gripper is configured to grip an implement out of a touch probe or at least one tool. The actuator is configured to move the tool gripper relative to the workpiece gripper. The machine control unit is configured to control the tool gripper and the actuator and to execute an actuator to execute an error measurement process. The error measurement process includes: determining, based on a posture of the workpiece machined into a gear shape held by the workpiece gripper, an approach starting point and an approach direction of the touch probe that is held by the workpiece gripper; controlling the actuator to move the touch probe from the approach starting point in the approach direction; determining a center position of a tip ball of the touch probe when the touch probe is moved to contact a surface of the workpiece; determining a candidate value of an error between the gear shape and a target shape of a gear product; generating a cross-sectional model representing a cross-sectional shape of a tooth surface based on the candidate value, the target shape, and the posture; obtaining a minimum distance between the cross-sectional model and the center position; and changing the candidate value to determine, as the error, the candidate value at which an absolute value of a difference between the minimum distance and a radius of the tip ball is equal to or less than an allowable value.

In accordance with a second aspect of the present disclosure, the machine tool according to the first aspect further includes a tool changer configured to replace one implement out of the touch probe and the at least one tool held by a tool gripper with another implement out of the touch probe and the at least one tool.

In accordance with a third aspect of the present disclosure, the machine tool according to the first or second aspect is configured such that the machine control unit is configured to control the tool changer to selectively hold the touch tool, a first tool, and a second tool by the gool gripper, and to receive a first command, a second command, and a third command. The machine control unit is configured to control the actuator to machine the workpiece into a gear shape with the first tool upon receiving the first command. The machine control unit is configured to execute the error measurement process upon receiving the second command. The machine control unit is configured to control the actuator to adjust a tool path of the second tool based on the error to manufacture the gear product upon receiving a third command.

In accordance with a fourth aspect of the present disclosure, an error measurement method includes causing a computer to determine an approach starting point and an approach direction of a touch probe based on a posture of a workpiece that has been machined into a gear shape, controlling an actuator to move the touch probe from the approach starting point in the approach direction, causing the computer to determine a center position of a tip ball of the touch probe when the touch probe is moved to contact a surface of the workpiece, and causing the computer to calculate an error between the gear shape and a target shape of a gear product based on the center position. The causing the computer to calculate the error includes determining a candidate value of the error, generating a cross-sectional model representing a cross-sectional shape of a tooth surface based on the candidate value, the target shape, and the posture, obtaining a minimum distance between the cross-sectional model and the center position, changing the candidate value to determine, as the error, the candidate value at which an absolute value of a difference between the minimum distance and a radius of a tip ball is equal to or less than an allowable value.

According to a fifth aspect of the present disclosure, in the machine tool according to the first aspect or the error measurement method according to the fourth aspect, the determining the approach starting point and the approach direction includes defining a contact target point of the target shape. The approach direction is determined to be a direction of a normal vector of a tangent plane or an opposite direction to the normal vector, the tangent plane being tangent to a surface of the target shape at the contact target point when the gear product is arranged in the posture. The approach starting point is determined at a position directed in the direction opposite to the approach direction from the contact target point.

According to a sixth aspect of the present disclosure, in the machine tool according to the fifth aspect or the error measurement method, the contact target point is a point on the pitch circle of the gear product. When the gear product is an involute gear, the value of the parameter of the involute curve representing the point on the pitch is equal to the pressure angle. When the gear product is a cycloid gear and the curve model is composed of an epicycloid curve and a hypocycloid curve, the pitch circle is the same as the base circle for generating the cycloid curve. When the gear product is a trochoid gear and the curve model is an epitrochoid parallel curve, the contact target point is not limited to the intersection point between the trochoid parallel curve and the pitch circle, but may be an intersection point between the trochoid parallel curve and a root circle, or may be an intersection point between the trochoid parallel curve and an addendum circle.

According to a seventh aspect of the present invention, in the machine tool or the error measurement method according to the fifth or sixth aspect, a first plane that is perpendicular to the tangent plane and that passes through the contact target is defined. A gear-rotation axis when the gear product is disposed in the posture is defined. The cross-sectional model is represented by a model curve obtained by shifting, in a separating direction away from the gear-rotation axis on the first plane when the gear product is disposed in the posture, a target curve that passes through the contact target point among a plurality of curves represented by intersecting the target shape with the first plane.

According to an eighth aspect, in the machine tool or the error measurement method according to the seventh aspect, the first plane is a plane obtained by rotating a second plane that is perpendicular to the gear-rotation axis about the gear-rotation axis or a straight line passing through the contact target point on the second plane by a helix angle defined from the tooth profile of the target shape.

According to a ninth aspect of the present disclosure, in the machine tool or the error measurement method according to the seventh or eighth aspect, the minimum distance is a distance between the center position and a proximate point that is closest to the center position among the plurality of points of the model curve.

According to a tenth aspect of the present disclosure, in the machine tool or the error measurement method according to any one of the seventh to ninth aspects, the model curve is a curve segment obtained by shifting a curve segment which is a segment of the target curve between a first intersection point and a second intersection point by the candidate value in the separating direction, the intersection point being an intersection point between the target curve and either a root circle or a base circle of the target shape centered on the gear-rotation axis, the second intersection point being an intersection point between the target curve and an addendum circle of the target shape centered on the gear-rotation axis. When the model curve is an involute curve, the first intersection point is preferably an intersection point between the target curve and one of the base circle and the root circle having a smaller radius, and when the model curve is a cycloid curve, or when the model curve is a cycloid curve, the first intersection point may be an intersection point between the root circle and the target curve. When the curve model is an epitrochoid parallel curve and the contact target point is an intersection point between the epitrochoid parallel curve and a root circle, two adjacent intersection points between the addendum circle and the target curve may be set as the first intersection point and the second intersection point. When the curve model is an epitrochoid parallel curve and the contact target point is an intersection point between the epitrochoid parallel curve and an addendum circle, two adjacent intersection points between the root circle and the target curve may be set as the first intersection point and the second intersection point.

According to an eleventh aspect of the present disclosure, in the machine tool or the error measurement method according to any one of the seventh to tenth aspects, each point of the model curve is represented by respective coordinates serving as parameters in a two dimensional coordinate system that defines positions on the first plane, and the positions of the plurality of points on the first plane are obtained by changing the parameters by equal amounts.

According to a twelfth aspect of the present disclosure, the error measurement method according to any one of the first to eleventh aspects further includes, before the touch probe is brought into contact with the workpiece, arranging the workpiece such that the posture of the workpiece becomes a predetermined posture, or setting a coordinate system for moving the touch probe in accordance with the posture of the workpiece. According to a twelfth aspect of the present invention, in the machine tool according to any one of the first aspect and the fifth to eleventh aspects, the machine control unit controls a workpiece gripper such that the posture of the workpiece becomes a predetermined posture before the touch probe is brought into contact with the workpiece, or sets a coordinate system for moving the touch probe in accordance with the posture of the workpiece. The predetermined posture is preferably a posture of a gear shape that allows the contact target point to be analytically determined in a predetermined coordinate system. Further, it is desirable that the coordinate systems set in correspondence with the posture of the workpiece are coordinate systems that allow the contact target point to be analytically obtained.

The gear manufacturing method according to a thirteenth aspect of the present disclosure includes, causing the computer according to any of the fourth through eleventh aspects receives the first command, to control the actuator to machine the workpiece into the gear shape with a first tool held in a tool gripper of the machine tool. The gear manufacturing method includes, causing the computer, when the computer receives a second command, to control the actuator to move the touch probe to calculate the error according to the error measurement method according to fourth through eleventh aspects. The gear manufacturing method includes causing the computer, when the computer receives a third command, to control the actuator to adjust a tool path of a second tool held by the tool gripper based on the error such that the gear product is manufactured by the second tool.

The gear manufacturing method according to a fourteenth aspect of the present disclosure further includes causing the computer according to any of the aspects up to the thirteenth aspect to control the tool changer of the machine tool such that a tool gripper of the machine tool grips the first tool when the computer receives the first command. The gear manufacturing method further includes causing the computer to control the tool changer to replace the tool held by the tool gripper with a touch probe when the computer receives a second command. The gear manufacturing method further includes causing the computer to control the tool changer to replace the touch probe held by the tool gripper with a second tool when the computer receives a third command.

According to a fifteenth aspect, the gear manufacturing method according to the thirteenth or fourteenth aspect includes causing the computer, before the touch probe is brought into contact with the workpiece, to rotate the workpiece such that the workpiece is set in a predetermined posture or controlling the workpiece gripper so as to set a coordinate system for moving the touch probe in accordance with the posture of the workpiece. According to a fifteenth aspect, in the machine tool according to the third aspect, before the touch probe is brought into contact with the workpiece, the machine control unit is configured to control the workpiece gripper to rotate the workpiece such that the posture of the workpiece becomes a predetermined posture or to set a coordinate system for moving the touch probe in correspondence with the posture of the workpiece. The predetermined posture is preferably a posture of a gear shape that allows the contact target point to be analytically determined in a predetermined coordinate system.

A gear measuring device according to a sixteenth aspect of the present disclosure includes a computer configured to execute the error measurement method according to any one of the fourth to twelfth aspects.

A computer program according to a seventeenth aspect of the present disclosure includes instructions which, when executed by a computer, cause the computer to carry out the error measurement method according to any one of the fourth to twelfth aspects.

A computer program according to an eighteenth aspect of the present disclosure comprises instructions that, when executed by a computer of the machine tool, cause the computer to carry out the gear manufacturing method according to either the thirteenth aspect or the fourteenth aspect.

According to a nineteenth aspect, the computer program according to the eighteenth aspect includes instructions which cause the computer to execute a process of controlling the workpiece gripper to rotate the workpiece such that the posture of the workpiece becomes a predetermined posture or to set a coordinate system for moving the touch probe in correspondence with the posture of the workpiece before the touch probe is brought into contact with the workpiece. The predetermined posture is preferably a posture of a gear shape that allows the contact target point to be analytically determined in a predetermined coordinate system.

A computer readable medium according to a twentieth aspect of the present disclosure comprises instructions which, when executed by a computer, cause the computer to carry out the error measurement method according to any of the fourth to twelfth aspects.

A computer readable medium according to a twenty first aspect of the present disclosure comprises instructions which, when executed by a computer of the machine tool, cause the computer to carry out the gear manufacturing method according to either the thirteenth aspect or the fourteenth aspect.

According to a twenty second aspect, the computer readable media according to the twenty first aspect comprises instructions which cause the computer to control a workpiece gripper to rotate the workpiece to a predetermined posture of the workpiece or to set a coordinate frame for moving the touch probe relative to the orientation of the workpiece before the touch probe is brought into contact with the workpiece. The predetermined posture is preferably a posture of a gear shape that allows the contact target point to be analytically determined in a predetermined coordinate system.

The machine tool according to the first aspect, the error measurement method according to the fourth aspect, the gear measuring device according to a sixteenth aspect comprising a computer configured to execute the error measurement method according to the fourth aspect, the computer program according to a seventeenth aspect comprising instructions for causing a computer to execute the error measurement method according to the fourth aspect, and the computer-readable media according to a twentieth aspect comprising instructions for causing a computer to execute the error measurement method according to the fourth aspect are configured to estimate, by using the cross-sectional model, the difference between the gear shape and the target shape of the gear product from the position of the tip ball of the touch probe when the touch probe contacts the center of the workpiece. Accordingly, it is not necessary to move the touch probe until the touch probe contacts two teeth of the gear, and thus the gear error may be measured using the selected touch probe regardless of the gear shape.

In the machine tool according to the fifth aspect, the error measurement method according to the fifth aspect, the gear measuring device according to the sixteenth aspect including a computer configured to execute the error measurement method according to the fifth aspect, the computer program according to the seventeenth aspect including instructions for causing a computer to execute the error measurement method according to the fifth aspect, and the computer-readable media according to the twentieth aspect including instructions for causing a computer to execute the error measurement method according to the fifth aspect, the touch probe is brought into contact with the workpiece substantially perpendicularly, and therefore, slippage after contact is less likely to occur, and gear errors can be measured with high accuracy.

In the machine tool according to the sixth aspect, the error measurement method according to the sixth aspect, the gear measuring device according to the sixteenth aspect including a computer configured to execute the error measurement method according to the sixth aspect, the computer program according to the seventeenth aspect including instructions for causing a computer to execute the error measurement method according to the sixth aspect, and the computer-readable medium according to the twentieth aspect including instructions for causing the computer to execute the error measurement method according to the sixth aspect, when the gear product is an involute gear, the approach direction can be easily derived using the number of teeth and the pressure angle of the gear specification. When the gear product is a cycloid gear, the approach direction is a tangential direction of the pitch circle, and therefore, the derivation is easy.

In the machine tool according to the seventh aspect, the error manufacturing method according to the seventh aspect, the gear measuring device according to the sixteenth aspect including a computer configured to execute the error measurement method according to the seventh aspect, the computer program according to the seventeenth aspect including instructions for causing a computer to execute the error measurement method according to the seventh aspect, and the computer-readable media according to the twentieth aspect including instructions for causing a computer to execute the error measurement method according to the seventh aspect, when the workpiece is generated by a gear tool such as a hob, the tooth profile is formed so as to be shifted with respect to the approach direction of the hob, and thus a highly accurate cross-sectional model can be generated.

In the machine tool according to the eighth aspect, the error measurement method according to the eighth aspect, the gear measuring device according to the sixteenth aspect including a computer configured to execute the error measurement method according to the eighth aspect, the computer program according to the seventeenth aspect including instructions for causing the computer to execute the error measurement method according to the eighth aspect, and the computer-readable media according to the twentieth aspect including instructions for causing the computer to execute the error measurement method according to the eighth aspect, the cross-sectional model of the workpiece having a helical gear shape can be generated with high accuracy.

In the machine tool according to the ninth aspect, the error measurement method according to the ninth aspect, the gear measuring device according to the sixteenth aspect including a computer configured to execute the error measurement method according to the ninth aspect, the computer program according to the seventeenth aspect including instructions for causing the computer to execute the error measurement method according to the ninth aspect, and the computer-readable medium according to the twentieth aspect including instructions for causing the computer to execute the error measurement method according to the ninth aspect, the coordinates of the approximate solution of the contact point can be obtained.

In the machine tool according to the tenth aspect, the error measurement method according to the tenth aspect, the gear measuring device according to the sixteenth aspect including a computer configured to execute the error measurement method according to the tenth aspect, the computer program according to the seventeenth aspect including an instruction for causing the computer to execute the error measurement method according to the tenth aspect, and the computer-readable medium according to the twentieth aspect including an instruction for causing the computer to execute the error measurement method according to the tenth aspect, the model curve can be represented by an involute curve in the case of an involute gear, the model curve can be represented by an epitrochoid parallel curve in the case of a trochoid gear, and the model curve can be represented by an epicycloid curve and a hypocycloid curve in the case of a cycloid gear, and thus mathematical modeling can be facilitated.

In the machine tool according to the eleventh aspect, the error measurement method according to the eleventh aspect, the gear measuring device according to the sixteenth aspect including a computer configured to execute the error measurement method according to the eleventh aspect, the computer program according to the seventeenth aspect including instructions for causing a computer to execute the error measurement method according to the eleventh aspect, and the computer-readable medium according to the twentieth aspect including instructions for causing a computer to execute the error measurement method according to the eleventh aspect, it is possible to accurately obtain an approximate solution of a contact point.

In the machine tool according to the twelfth aspect, the method according to the twelfth aspect, the gear measuring device according to the sixteenth aspect comprising a computer configured to execute the method according to the twelfth aspect, the computer program according to the seventeenth aspect comprising instructions for causing a computer to execute the method according to the twelfth aspect, and the computer-readable media according to the twentieth aspect comprising instructions for causing a computer to execute the method according to the twelfth aspect, the model curve and the coordinate systems of the positions can be determined according to the posture of the center of the workpiece.

In the machine tool according to the second aspect, the touch probe and the tool can be replaced by the machine tool, and thus the burden on the user when performing an operation combining machining and error measurement can be reduced.

In the machine tool according to the third aspect, the gear manufacturing method according to the thirteenth aspect, the computer program according to the eighteenth aspect, and the computer-readable medium according to the twenty first aspect including instructions for causing a computer to execute the gear manufacturing method according to the thirteenth aspect, the machining program including the first command to the third command is read by the machine tool, and thereby, the series of operations of the rough machining, the error measurement, and the finish machining can be automatically executed by the machine tool without removing the workpiece from the machine tool.

In the machine tool according to the third aspect, the gear manufacturing method according to the fourteenth aspect, the computer program according to the eighteenth aspect including an instruction for causing a computer to execute the gear manufacturing method according to the fourteenth aspect, and the computer-readable medium according to the twenty first aspect including an instruction for causing a computer to execute the gear manufacturing method according to the fourteenth aspect, by causing the machine tool to read the machining program including the first command to the third command, it is possible to automate the replacement of the tool and cause the machine tool to automatically execute all of the series of operations of the rough machining, the error measurement, and the finish machining.

In the machine tool according to the fifteenth aspect, the gear-manufacturing method according to the fifteenth aspect, the computer program according to the nineteenth aspect, and the computer-readable media according to the twenty second aspect, the model curve and the coordinate systems of the position can be determined according to the posture of the center of the workpiece.

### Effects of the Invention

According to the technique disclosed in the present application, for example, since it is not necessary to move the touch probe until the touch probe comes into contact with two teeth of the gear, the gear error can be measured using the touch probe selected regardless of the gear shape.

### BRIEF DESCRIPTION OF DRAWINGS

FIG.1 shows a schematic configuration of a machine tool according to a first embodiment.
FIG.2 is a hardware block diagram of the machine control unit.
FIG. shows a state of the workpiece related to the measurement of errors by the machine control unit.
FIG.4 is a flowchart showing each operation of the error measurement process of the machine control unit.
FIG.5 is a diagram explaining a shape model representing a cross-sectional shape of a tooth surface when the gear product is a spur gear.
FIG.6 is a schematic view showing an approach starting point and an approach direction when the gear product is a spur gear.
FIG. shows an example of a machining program.
FIG.8 is a flowchart showing each operation of the gear manufacturing process of the machine control unit.
FIG.9 is a flowchart showing each operation of the gear manufacturing process of the machine control unit.
FIG.10A is a diagram showing an approach starting point and an approach direction when the gear product is a helical gear.
FIG.10B is a diagram showing another method of determining the approach starting point and the approach direction when the gear product is a helical gear.
FIG.11A is a diagram showing the approach starting point and the approach direction when the gear product is a standard bevel gear.
FIG.11B is a diagram showing another method of determining the approach starting point and the approach direction when the gear product is a standard bevel gear.
FIG.12A is a cross-sectional view of an example of a speed reducer including trochoid gears.
FIG.12B is a cross-sectional view of another example of a speed reducer including trochoid gears.
FIG.13A is a diagram showing the approach starting point and the approach direction when the external-gear product shown in FIG. 12A is a trochoid gear.
FIG.13B is a schematic diagram showing an another method to determine an approach starting point and an approach direction when the external-gear product as shown in FIG.12A is a trochoid gear.
FIG.14 is a schematic diagram showing an approach starting point and an approach direction when the gear product is a cycloid gear.

### DESCRIPTION OF THE EMBODIMENTS

The present invention will be described in detail below with reference to the drawings showing the embodiments. In the drawings, the same reference numerals indicate corresponding or substantially identical components.

### <First Embodiment>

### <Overall Configuration>

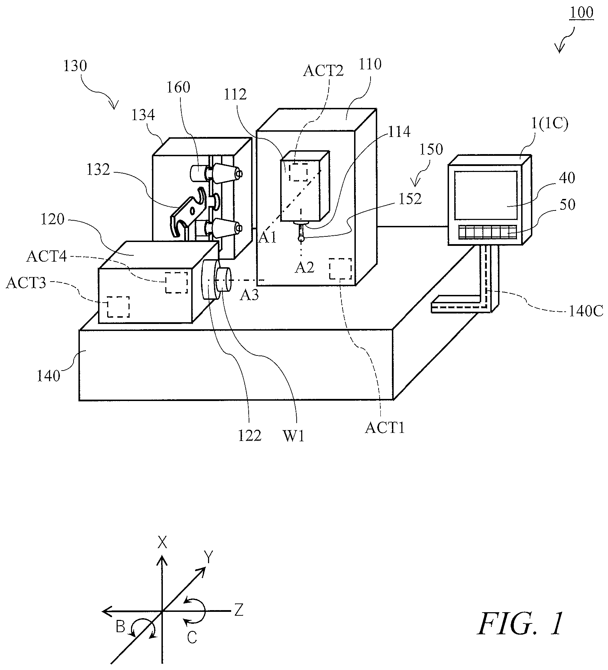

FIG. 1 shows a schematic configuration of a machine tool according to a first embodiment. Note that the X axis shown in FIG. 1 is along the height direction of the machine tool 100, the Y axis is along the depth direction of the machine tool 100, and the Z axis is along the width direction of the machine tool 100. The B direction is a circumferential direction of the Y axis, and the C direction is a circumferential direction of the Z axis.

The machine tool 100 machines a workpiece held by the workpiece spindle 122 into a gear shape by performing gear cutting such as hob machining or gear skiving on the workpiece W1 as rough machining. However, the machine tool 100 may machine the workpiece W1, which has been roughly machined by a machine tool different from the machine tool 100, into a gear product by performing deburring and finishing. As shown in FIG. 1, the machine tool 100 includes a column 110, a tool headstock 112, a workpiece headstock 120, and a tool changer 130. The column 110, the workpiece headstock 120, and the tool changer 130 are disposed on a base 140.

The column 110 is movable in the Y axis direction and the Z axis direction on the base 140. A tool headstock 112 is attached to the column 110. The tool headstock 112 is movable in the X-axis direction with respect to the column 110. The headstock 112 is rotatable relative to the column 110 in a direction B which is a circumferential direction of the rotation axis A1 along the Y axis direction. The machine tool 100 comprises a first actuator ACT1 configured to move the headstock 112 in the X axis direction and in the B-direction. The first actuator ACT1 include at least one motor and a power conversion mechanism such as a ball screw, for example. The first actuator ACT1 may include a motor for moving the headstock 112 in the X-axis direction and a motor for moving the headstock 112 in the B-direction, separately. Alternatively, the first actuator ACT1 may include a power conversion mechanism for moving the headstock 112 in the X-axis direction and a power conversion mechanism for moving the headstock 112 in the B-direction, which are separately provided from one motor. The machine tool 100 comprises a tool spindle 114. The tool spindle 114 is also referred to as a tool gripper. The tool spindle 114 is attached to tool headstock 112. The tool spindle 114 is rotatable about a rotation axis A2 extending along the X-axis direction with respect to the headstock 112. The machine tool 100 comprises a second actuator-side ACT2 configured to rotate the tool spindle 114 about the rotation axis A2. The second actuator ACT2 is, for example, a motor. The tool spindle 114 is configured to hold an implement of any one of a touch probe 150 and at least one machine tool 160. The touch probe 150 will be described in detail later.

The machine tool 100 comprises a workpiece spindle 122. The workpiece spindle 122 is also referred to as a workpiece gripper. The workpiece spindle 122 is attached to a workpiece headstock 120. The workpiece spindle 122 is rotatable in a C direction, which is a circumferential direction of the rotation axis A3. The rotation axis A3 extends along the Z-axis direction. The workpiece spindle 122 is configured to hold a workpiece W1. The workpiece spindle 122 may grip the workpiece W1 via chucks or the like. The machine tool 100 includes fourth actuator ACT4 configured to rotate the workpiece spindle 122 in the circumferential direction of the rotation axis A3. The fourth actuator ACT4 is, for example, a motor.

The machine tool 100 includes a third actuator ACT3 configured to move the workpiece headstock 120 in the Z-axis direction. The third actuator ACT3 includes, for example, motors and power conversion mechanisms such as ball screws. The first to fourth actuators ACT1 to ACT4 are collectively referred to as actuators ACT. The functions of the first to fourth actuators ACT1 to ACT4 are not limited to the above-described functions, and for example, the first actuator ACT1 may move the headstock 112 in the X axis direction and the Z axis direction. That is, the machine tool 100 comprises a possible actuator ACT configured to move a tool gripper (tool spindle 114) relative to a workpiece gripper (workpiece spindle 122). The first to fourth actuators ACT4 preferably include a rotation sensor such as an encoder for detecting the amount of movement and the rotation angle of the control target.

The tool changer 130 is configured to change any one of the touch probe 150 and the at least one tool 160 held by the tool spindle 114 to another one of the touch probe and the at least one tool. Specifically, tool changer 130 includes a magazine arm 132 and a stocker 134. The magazine arm 132 is rotatable about an axis along the Z axis direction. The magazine arm 132 is movable in the Z axis direction with respect to the stocker 134. The stocker 134 accommodates the touch probe 150 and at least one tool 160 so as to be movable in the X-axis direction. The at least one tool 160 includes at least one of a hob, a skiving cutter, a side cutter having a tooth space shaped cross-section, a pinion cutter, and a milling tool.

The tool changer 130 changes the tool in the following procedure. Tool headstock 112 moves in the X axis direction and turns in the B-axis direction to bring the tool attached to tool spindle 114 into a state of facing tool changer 130. The column 110 approaches the tool changer 130 in the Y axis direction and the Z axis direction, and moves the tool to the tool change position. The magazine arm 132 has a first gripper at one end in the direction in which the magazine arm 132 extends, and a second gripper at the other end in the direction in which the magazine arm extends. The first gripper grips the tool attached to the tool spindle 114 in order to remove the tool attached to the tool spindle 114. When the magazine arm 132 is separated from the tool spindle 114 in the Z-axis direction, the tool is removed from the tool spindle 114. In order to mount another tool on the tool spindle 114, the magazine arm 132 rotates about an axis along the Z axis direction and moves the other tool gripped by the second gripper to the tool mounting position. When the column 110 approaches the tool changer 130 in the Z axis direction, another tool is attached to the tool spindle 114.

The machine tool 100 includes a machine control unit 1 for controlling rotation about each rotation axis and movement in each axial direction. The machine control unit 1 is configured to control a tool spindle 114 (tool gripper), a workpiece spindle 122 (workpiece holder), and an actuator ACT. The machine control unit 1 is connected to the base 140. Here, the machine control unit 1 may be connected to another part of the machine tool 100, and may be installed separately from the base 140 as long as the control signal can be transmitted and the detection result can be received. The machine control unit 1 is provided with a display 40 and an input interface 50. The input interface 50 may include a touch panel built in the display 40. The display 40 and the input interface 50 realize a graphical user interface. However, the display 40 and the input interface 50 may be provided separately from the machine control unit 1.

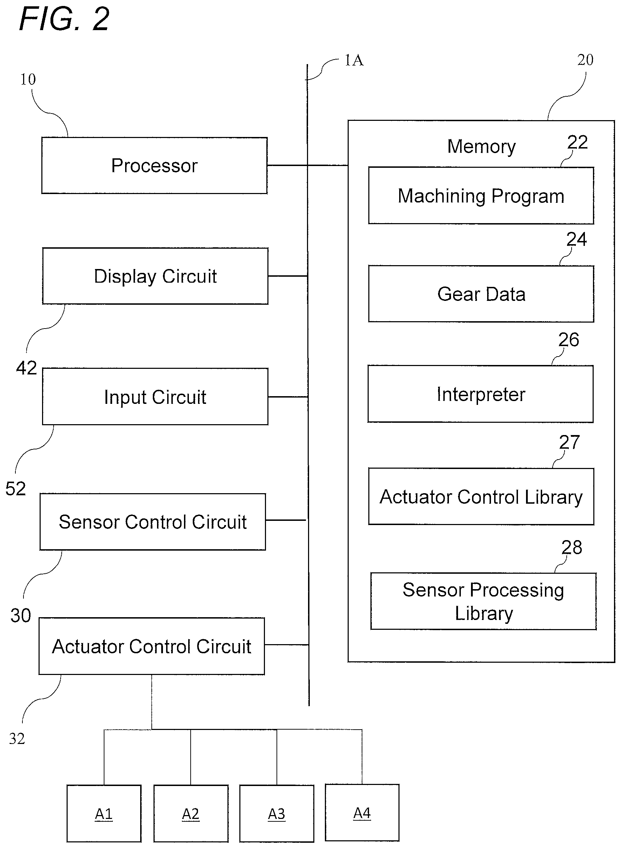

FIG. 2 is a hardware block diagram of the machine control unit 1. As shown in FIG. 2, the machine control unit 1 includes a processor 10, a memory 20, a sensor control circuit 30, a display circuit 42, and an input circuit 52. The processor 10, the memory 20, the sensor control circuit 30, the display circuit 42, and the input circuit 52 are connected to each other via a bus 1A. The memory 20 stores programs and data necessary for machining. The processor 10 is a hardware processor including an electric circuit (circuitry), and reads a program stored in the memory 20 and executes the read program. Thereby, each function of the machine control unit 1 is realized. The functions realized by the machine control unit 1 include processes such as rough machining of a gear, phase detection of a gear, deburring of a gear, finish machining, and profiling measurement of a tooth surface. The processor 10 and the memory 20 have the same functions as those of a general computer, and thus the machine control unit 1 may be referred to as a computer 1C.

Specifically, the memory 20 is configured to store a machining program 22, gear data 24, an interpreter 26, an actuator control library 27, and a sensor processing library 28. The machining program 22 is described by program codes such as EIA/ISO program codes, and includes commands for machining the workpiece W1 into a gear shape, detecting the posture of the workpiece W1, and measuring errors between the machined gear shape of the workpiece W1 and a target shape TS of a gear product. The gear data 24 includes dimensions (for example, a module, a pressure angle, and the number of teeth) of the target shape TS. The gear data 24 may be three dimensional CAD data.

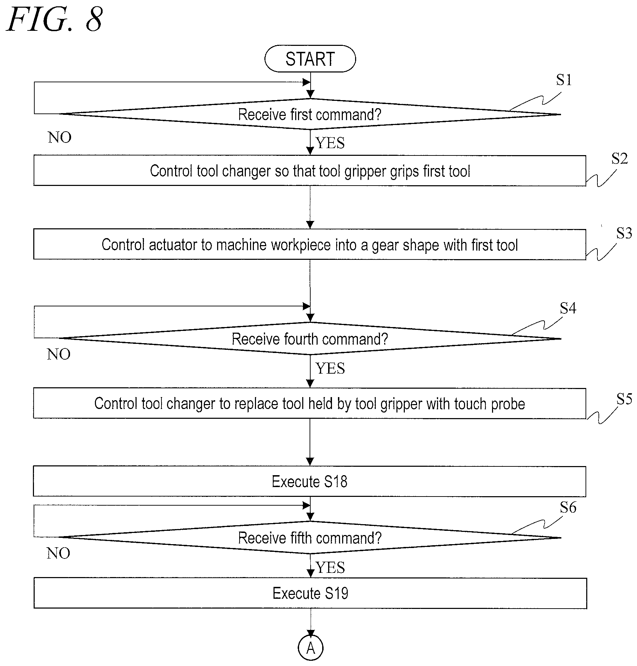

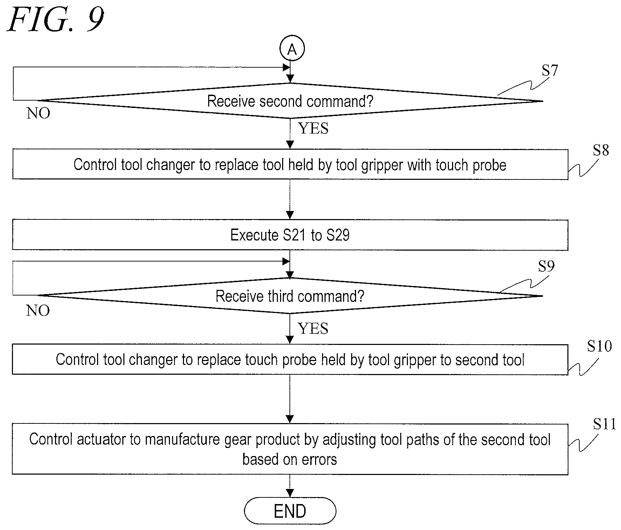

The interpreter 26 is a program for analyzing a command described in the machining program 22 and executing at least one of the actuator control library 27 and the sensor processing library 28. That is, the machine control unit 1 is configured to execute the interpreter 26 to receive various commands (e.g., first to fifth commands shown in FIGS. 8 and 9 described later) described in the machining program 22. The actuator control library 27 is a program for executing commands for controlling the tool changer 130 described in the machining program 22, commands for driving or moving the workpiece spindle 122 or the tool spindle 114 described in the machining program 22, and commands for measuring errors between the gear shape of the machined workpiece W1 and the target shape TS of the gear product. The sensor processing library 28 is a program for executing a command for detecting the posture of the workpiece W1 and a command for measuring the difference between the gear shape of the machined workpiece W1 and the target shape TS of the gear product. The detected posture of the workpiece W1 is, for example, the phases of the gears in the C direction of the workpiece spindle 122. When receiving a command for controlling the tool changer 130 described in the machining program 22, the interpreter 26 calls the actuator control library 27 and executes a process of controlling the tool changer 130 such that the tool spindle 114 (tool gripper) selectively holds the first tool and the second tool of at least one tool (machine tool) and the touch probe 150. That is, the machine control unit 1 is configured to control the tool changer 130 such that the tool spindle 114 (tool gripper) selectively holds the first tool and the second tool of the at least one tool and the touch probe 150. When the interpreter 26 receives a command to measure the difference between the gear shape of the workpiece W1 and the target shape TS of the gear product, the interpreter 26 calls the actuator control library 27, executes a process of moving the touch probe 150 held by the spindle 114, calls the sensor processing library 28, and executes a process of detecting a contact state by the contact sensor mounted on the touch probe 150.

When the sensor processing library 28 is executed, the sensor control circuit 30 receives a detection signal output from the contact sensor mounted on the touch probe 150, thereby detecting whether or not a tip ball 152 of the touch probe 150 has contacted an object. For example, when the first to fourth actuators ACT1 to ACT4 are motors, the actuator control circuit 32 includes an electric circuit that generates control signals to drivers. For example, when the actuator control library 27 outputs a target rotation speed or a target torque of the motor based on a command described in the machining program 22, the actuator control circuit 32 outputs a control signal (for example, a pulse signal) to the driver corresponding to the target rotation speed or the target torque. Note that a control signal from the machine control unit 1 and a detection signal from the touch probe 150 are transmitted and received via a cable 140C between the machine control unit 1 and the base 140.

The display circuit 42 is, for example, a video card, and is connected to the display 40. The display circuit 42 controls drawing of the display 40 under the control of the processor 10. The input circuit 52 is connected to the input interface 50. The input circuit 52 outputs the operation received by the input interface 50 to the processor 10 as an operation input signal.

### <Error Measurement Process of Workpiece>

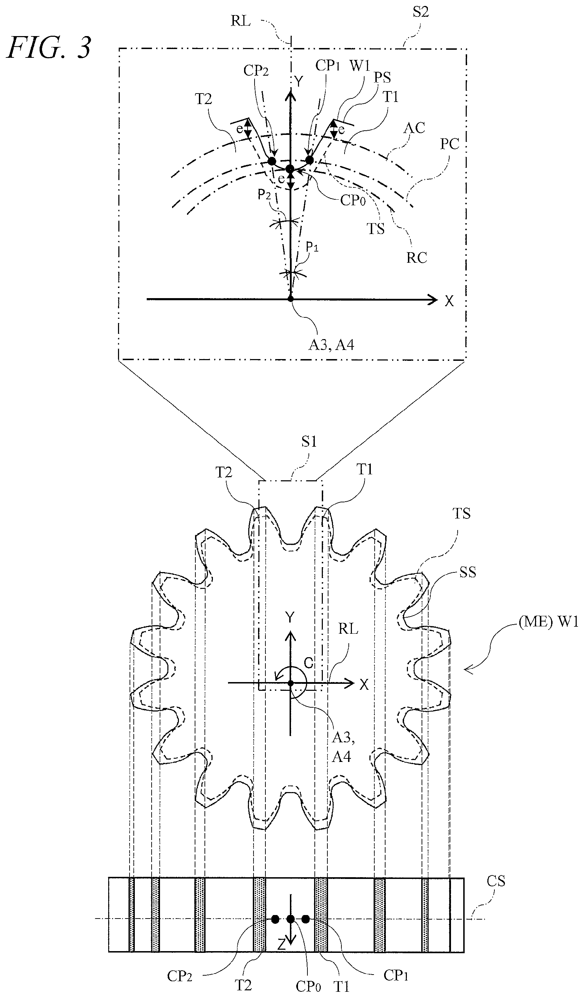

FIG. 3 shows a state of the workpiece W1 related to the measurement of errors by the machine control unit 1. A region SP2 in FIG. 3 is an enlarged view of the region SP1. The machine control unit 1 moves at least one machine tool 160, for example, a hob or a skiving cutter, in a radial direction (machining approach direction) with respect to a rotation axis A3 of the workpiece spindle 122, and machines a workpiece W1 having, for example, a cylindrical shape into a gear shape. Therefore, the gear-rotation axis A4 of the workpiece W1 coincides with the rotation axis A3 of the workpiece spindle 122. In FIG. 3, the target shape TS of the gear product is indicated by a dotted line, and the outer shape of the workpiece W1 is indicated by the outer peripheral surface PS. In view of the nature of machining by a hob or a skiving cutter, when a shape model of only two adjacent teeth T1 and T2 is considered, the outer peripheral surface PS is present at a position separated from the target shape TS by the deviation e in the machining approach direction. Although FIG. 3 illustrates a case where the Y-axis direction is equal to the processing approach direction, the processing approach direction may be another direction.

When the workpiece W1 is machined into a gear-shape by a hob or a skiving cutter, the machine tool 100 does not know at which angle the grooves or teeth of the workpiece W1 held by the workpiece spindle 122 are located in the C direction, which is the circumferential direction of the rotation axis A3 of the workpiece spindle 122. That is, the phases of the gears in the C direction represented by the outer peripheral surface PS formed at the workpiece W1 with respect to the workpiece spindle 122 are unknown to the machine tool 100. Therefore, the machine tool 100 detects the phase of the gear in the C direction with respect to the workpiece spindle 122 in order to measure the error e.

Here, a phase P of the gear represented by the outer peripheral surface PS in the present embodiment is defined as follows. The phase angle P is an angle formed by any position on the C-axis of the outer peripheral surface PS with respect to a reference position RL on the C-axis which is the circumferential direction of the gear-rotation axis A4 of the workpiece W1. The reference position RL is, for example, a position corresponding to the machining approach direction. Hereinafter, the reference position RL will be described as corresponding to the Y-axis positive direction. As shown in FIG. 3, when the pitch circle PC of the gear product and the outer circumferential surface PS of two adjacent teeth T1 and T2 are defined as the intersection points CP₁ and CP₂, and the midpoint of the curve segment CP₁CP₂ on the outer circumferential surface PS is defined as CP₀, the phases of the points CP₁, CP₂, and CP₀ are defined as P₁, P₂, ad P₀ respectively. The points CP₁, CP₂, and CP₀ are not limited to the points on the pitch circle PC, and may be on any circumference as long as the circumference is a circumference centered on the rotation axis of the gear product between the addendum circle AC and the root circle RC.

In the present embodiment, the phases P₁ and P₂ are obtained by moving the touch probe 150 relative to the workpiece W1 in the circumferential direction of the pitch circle PC, and the middle phase between the phases P₁ and P₂ is set as P₀, whereby the phase P₀ can be obtained. In particular, for example, the machine control unit 1 determines the X coordinate and the Y coordinate of the T1 position of the tip ball 152 of the touch probe 150 such that the X coordinate and the Y coordinate of the tip ball 152 of the touch probe 150 are positioned between two adjacent teeth T1 and T2 by utilizing the fact that the movable moving distance in the Z axis direction by moving the touch probe 150 in the Z axis direction when the X coordinate and the Y coordinate of the tip ball 152 of the touch probe 150 are positioned between two adjacent teeth T1 and T2 center is longer than the moving distance when the tip ball is in contact with the toothed wheel side surface SS. It is desirable that the X coordinate and the Y coordinate are provided on the pitch circle PC. Then, the machine control unit 1 moves the tip ball 152 of the touch probe 150 in the Z-axis direction so as to be located between two adjacent teeth T1 and T2. The positions of the points CP₁, CP₂, and CP₀ in the Z axis direction are shown in the lower diagram of FIG. 3.

Next, the fourth actuator ACT4 are driven to rotate the workpiece W1 about the rotation axis A4 (the gear-rotation axis A4), and the point CP₁ and the point CP₂ are brought into contact with the touch probe 150. When the touch probe 150 is in contact with the touch panel, the point CP₁ and the point CP₂ are spaced apart from the center position of the tip ball 152 of the touch probe 150 by the radius of the tip ball 152, but are spaced apart from each other in opposite directions by the radius of the tip ball 152. Therefore, the phases P₀ when the rotation angle of the fourth actuator ACT4 is set to an arbitrary angle θ can be obtained from the rotation angle θ₀ which is exactly the middle between the rotation angle θ₁ of the fourth actuator ACT4 when the point CP₂ is brought into contact with the touch probe 150 and the rotation angle θ₂ of the fourth actuator ACT4 when the point CP₂ is brought into contact with the touch probe 150.

Once the phases P₀ are known, the machine control unit 1 rotates the workpiece W1 about the rotation axis A3 (gearwheel rotation axis A4) by driving the fourth actuator ACT4 in such a way that the point CP₀ lie on the Y axis. Alternatively, the machine control unit converts the X axis and the Y axis into an X' axis and a Y' axis by rotating the X axis and the Y axis around the Z axis such that the point CP₀ is located on the Y' axis, and executes the following movement of the touch probe 150 and the coordinate systems of the errors e in the X' Y' coordinate systems. Hereinafter, the description will be made assuming that the workpiece W1 is rotated such that the point CP₀ is located on the Y axis, but when the coordinate transformation to the X' Y' coordinates system is performed, the XY coordinates system in the following description may be read as the X' Y' coordinates system.

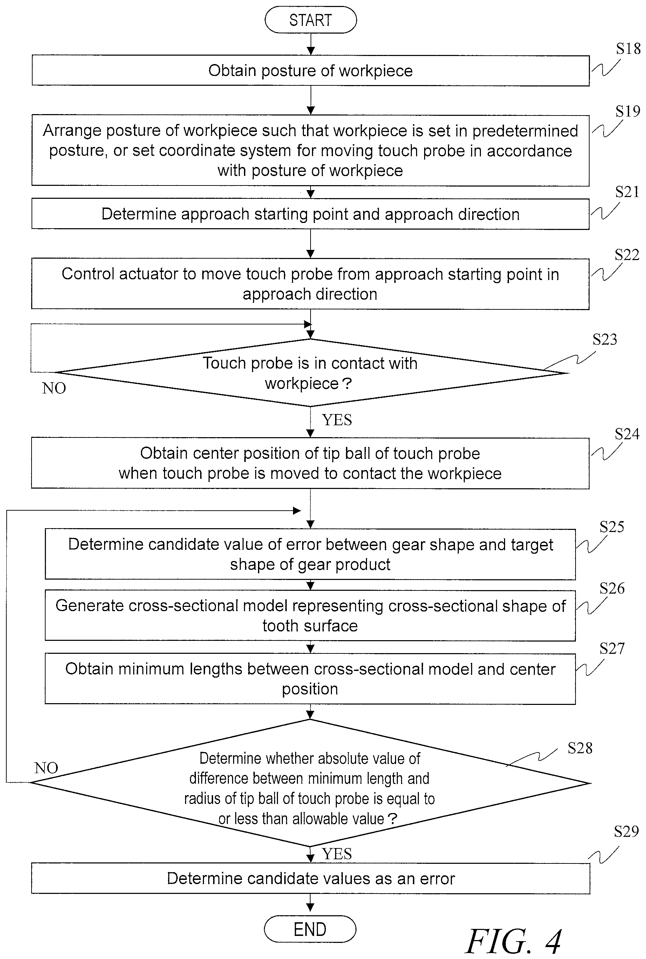

After the preprocessing as described above is performed, the machine control unit 1 is configured to execute an error measurement process described below. FIG. 4 is a flowchart illustrating operations of the error measurement method according to the present embodiment, that is, the error measurement process performed by the machine control unit 1 (computer 1C). When receiving a predetermined command described in the machining program 22, the processor 10 executes the actuator control library 27 and the sensor processing library 28 to execute step S18 and step S19. In step S18, the processor 10 obtains the posture of the workpiece W1. The posture of the workpiece W1 is, for example, the above-described phase P₀ of the point CP₀. That is, the error measurement method includes causing the computer 1C to determine the orientation of the workpiece W1.

In step S19, the processor 10, the posture of the workpiece W1 is arranged so as to have a predetermined posture, or a coordinate system for moving the touch probe 150 is set in accordance with the posture of the workpiece. That is, the error measurement method includes, before the touch probe 150 is brought into contact with the workpiece W1 for measuring the errors, arranging the workpiece W1 in the computer 1C such that the workpiece W1 has a predetermined posture, or setting a coordinate system for moving the touch probe 150 in accordance with the posture of the workpiece W1. For example, the posture of the workpiece W1 being the predetermined posture means that the point CP₀ is a point on an axis (Y axis in the example of FIG. 3) extending from the rotation axis A3 (gear-rotation-axis A4) in the direction opposite to the machining approach direction. That is, arranging the workpiece W1 such that the posture of the workpiece W1 becomes a predetermined posture means rotating the workpiece W1 to a posture that facilitates calculation of the later-described error measurement process. The coordinate systems for moving the touch probe 150 in accordance with the posture of the workpiece W1 are set such that the axes (X' axis) from the rotation axis A3 (gear-wheel rotation axis A4) to the central point CP₀ between the adjacent teeth T1 and T2 and the axis (Y' axis) perpendicular to the axis (X' axis) are set as reference axes X' Y' coordinate system. The coordinate system is used to move the touch probe 150 for error measurement. That is, setting the coordinate systems for moving the touch probe 150 in accordance with the posture of the workpiece W1 means setting the coordinate systems for moving the touch probe 150 to coordinate systems that facilitate calculation of the later-described error measurement process.

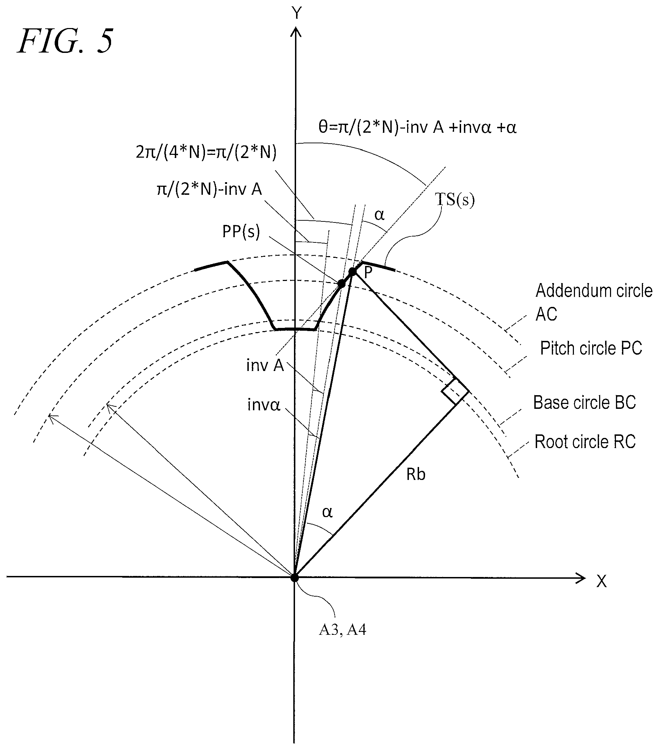

In step S21, the processor 10 determines an approach starting point APSP and an approach direction APD of the touch probe 150 held by the tool spindle 114 (tool gripper) based on the posture of the workpiece W1 that has been machined into a gear shape held by the workpiece spindle 122 (gripper). That is, the error measuring method includes causing the computer 1C to determine the approach starting point APSP and the approach direction APD of the touch probe 150 based on the posture of the workpiece W1 processed into a gear shape. Hereinafter, the contents of the flowchart will be described by taking a case where the gear product is an involute gear and a spur gear as an example. The calculation can be performed in the same manner when the gear product is another gear, but a calculation method in that case will be described in a modification. FIG. 5 is a diagram for explaining a shape model representing a cross-sectional shape of a toothed surface (target shape TS of a gear product, an outer peripheral surface PS of a portion of a workpiece W1) when the gear product is a spur gear.

At this time, the coordinates (x, y) of the point P on the target shape TS in the XY coordinate system are expressed by the following (Equation 1) and (Equation 2) using a parameter α (rad). $x = Rb / cos α * sin \left(π/\left(2*N\right)-invA+inv α\right)$ (Equation 1) $y = Rb / cos α * cos \left(π/\left(2*N\right)-invA+invα\right)$ (Equation 2) The parameter α is an angle as represented in FIG. 5. In Equations 1 and 2, Rb is the radius of the base circle BC. The angle A (rad) is the pressure angle. N is the number of teeth of the gear product. The radius Rp of the pitch circle PC is 1/cosA times the radius Rb of the base circle BC. The involute angle invA is tanA-A and the involute angle invα is tan α - α. Note that (Equation 1) and (Equation 2) utilize the fact that when the intersection point of the involute curve and the base circle BC is on the Y axis, the parameter α (rad) becomes equal to the pressure angle A (rad) at the contact target point PP(s), which is the intersection point of the involute curve and the pitch circle PC.

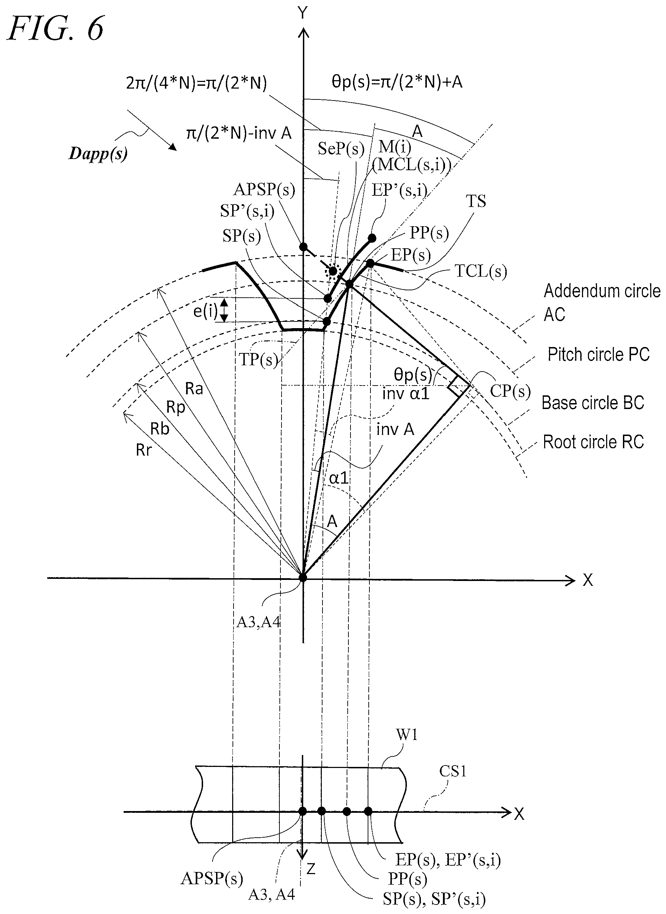

FIG. 6 is a schematic diagram showing an approach starting point and an approach direction. Referring to FIG. 6, the X coordinate of the PP(s) is Rp * sin (π/(2 * N)), and the Y coordinate of the PP(s) is Rp * cos (π / (2 * N)). This point PP(s) is referred to as the contact target point PP(s) of the target shape TS. The approach direction ***Dapp(s)*** is equal to a direction toward an intersection point CP(s) with a tangent line extending from the point PP(s) to the base circle BC. That is, determining the approach starting point APSP(s) and the approach direction ***Dapp(s)*** includes determining the contact target point PP(s) of the target shape TS. In addition, the approach direction ***Dapp(s)*** is a direction in which the gear product is in a predetermined posture (midpoint CP₀ of two adjacent teeth is arranged so as to pass through the Y axis), the direction of the normal vector of the tangent plane TP(s) of the target shape TS at the contact target point PP(s) when the contact target point PP(s) is arranged at the contact target point PP(s) or the opposite direction thereof is determined.

When the approach starting point APSP(s) is a point on the Y axis, an angle formed by a straight line from the intersection of the gear-rotation-axis line A4 and the XY plane toward the approach starting point APSP(s) and a straight line from the intersection of the gear-rotation-axis line A4 and the XY plane toward the approach starting point APSP(s) is equal to an angle θp(s) = π/(2 * N) + A formed by a straight line where the tangent plane TP(s) and the XY plane intersect and the Y axis. Therefore, the Y coordinate of the approach starting point APSP(s) at this time is expressed as Rb/cos (A + π / (2 * N)), that is, Rp * cosA/cos (A + π / (2 * N)). The approach direction ***Dapp(s)*** can be expressed as a vector from the approach starting point APSP(s) toward the contact target point PP(s). That is, the approach starting point APSP(s) is determined at a position directed in the direction opposite to the approach direction ***Dapp(s)*** from the contact target point PP(s). At this time, the approach direction ***Dapp(s)*** is expressed as in the following (Equation 3). $Dapp \left(s\right) = \left(Rp*sin\left(π/\left(2*N\right),Rp*cos\left(π/\left(2*N\right)-Rp*cosA/cos\left(A+π/\left(2*N\right)\right),0\right)\right.\right.$ (Equation 3)

In the above method, the approach starting point APSP(s) is first obtained as a point on the Y axis, and a vector from the approach starting point APSP(s) toward the contact target point PP(s) is set as the approach direction ***Dapp(s)***. The approach direction ***Dapp(s)*** can be (cos θ p(s), - sin θ p(s)). Here, when the distance between the approach starting point APSP(s) and the contact target point PP(s) is defined as an approach distance L, the coordinates (Xps, Yps) of the approach starting point APSP(s) is determined as below. The approach distance L may be a predetermined value or may be input by the user.$Xps = Rp * sin \left(π/\left(2*N\right)\right) - L * cos \left(π/\left(2*N\right)+A\right)$ (Equation 4) $Yps = Rp * cos \left(π/\left(2*N\right)\right) + L * sin \left(π/\left(2*N\right)+A\right)$ (Equation 5)

Next, in step S22, the processor 10 controls the actuator ACT to move the touch probe 150 from the approach starting point APSP(s) in the approach direction ***Dapp(s)***. That is, the error measurement method includes controlling the actuator ACT to move the touch probe 150 from the approach starting point APSP(s) in the approach direction ***Dapp(s)***.

In step S23, the processor 10 determines whether the touch probe 150 has contacted the workpiece W1 due to the movement. That is, the error measurement method includes determining whether the movement caused the touch probe 150 to contact the workpiece W1. In detail, the processor 10 can determine whether the touch probe 150 is in contact with the workpiece W1 based on whether the detection signal output from the contact sensor mounted on the touch probe 150 is received. When the touch probe 150 is not in contact with the workpiece W1 (No in step S23), step S23 is repeated.

When the touch probe 150 is moved to contact the workpiece W1 (Yes in step S23), the processor 10 obtains the center position of the tip ball 152 of the touch probe 150 at that time in step S24. That is, the error measurement method includes causing the computer 1C to determine a center position of a tip ball 152 of the touch probe 150 when the touch probe 150 contacts the workpiece W1 due to the movement. In detail, the processor 10 calculates the center position SeP(s) of the tip ball 152 from the output of the rotation sensor of the first actuator ACT1 or third actuator ACT3 at the time of receiving the detection signal from the first actuator ACT1 or third actuator ACT3. In the following description, the coordinates of the center position SeP(s) are (x(s), y(s), z(s)).

Next, in step S25, the processor 10 determines candidate values e(i) of errors between the gear shape (outer peripheral surface PS) and the target shape TS of the gear product. That is, the error measurement method includes causing the computer 1C to determine candidate values e(i) of the errors. Specifically, the processor 10 determines the candidate value e(i) while increasing the candidate value e(i) from a negative predetermined value by a predetermined increment. In step S26, the processor 10 generates a cross-sectional model (I) representing the cross-sectional shape of the teeth surface based on the candidate values e(i), the target shape TS, and the predetermined posture. That is, the error measurement method includes causing the computer 1C to generate the cross-sectional model M(i) representing the cross-sectional shape of the teeth surface based on the candidate values e(i), the target shape TS, and the predetermined posture.

Cross-sectional model M(i) in the generation of the contact target point PP(s), a first plane CS1 (see the lower part of FIG. 6) that is perpendicular to the tangent plane TP(s) and that passes through the contact target point PP(s) and the gear-rotation axis A4 when the gear product is disposed in the predetermined posture are defined. The cross-sectional model M(i) is represented by a model curve MCL (s, i) obtained by shifting, in a separating direction (Y direction) away from the gear-rotation axis line A4 on the first plane CS1, a target curve TCL(s) that passes through the contact target point PP(s) among a plurality of curves represented by intersecting the target shape TS with the first plane CS1. The model curve MCL (s, i) is a curve segment obtained by shifting a curve segment which is a segment of the target curve TCL(s) between a first intersection point SP(s) and a second intersection point EP(s) by the candidate value e(i) in the separating direction (Y direction), the first intersection point SP(s) being an intersection point between the target curve TCL(s) and either a root circle RC or a base circle BC of the target shape TS centered on the gear-rotation axis A4, the second intersection point EP(s) being an intersection point between the target curve TCL(s) and an addendum circle AC of the target shape TS centered on the gear-rotation axis A4. The first end point SP ' (s, i) of MCL (s, i) is located at a position moved by the candidate value e(i) in the Y direction with respect to the position of the first intersection point SP(s). The second end point EP' (s, i) of MCL (s, i) is located at a position moved by the candidate value e(i) in the Y direction with respect to the position of the second intersection point EP(s).

In the example of FIG. 6, the radius Rb of the base circle BC is larger than the radius Rr of the root circle RC, but the radius Rr of the root circle RC may be larger than the radius Rb of the base circle BC depending on the design of the gear. The first intersection point SP(s) is an intersection point between the target curve TCL(s) and a circle having a larger radius between the root circle RC and the base circle BC. In the case of the example of FIG. 6, the XY coordinates of the first intersection point SP(s) are expressed as (Rb * sin (π / (2 * N) - invA), Rb * cos (π / (2 * N) - invA)). The XY coordinates of the second intersection point EP(s) are expressed as (Ra * sin (π / (2 * N) - invA + inv α 1), Ra * cos (π / (2 * N) - invA + inv α 1)). Here, Ra is a radius of an addendum circle AC, and α 1 is a parameter for defining coordinates of the second intersection point EP(s), and α 1 = arccos (Rb / Ra).

At this time, according to (Equation 1) and (Equation 2), the XY coordinates (x (i, α), y (i, α)) of an arbitrary point of the cross-sectional model M(i) (model curve MCL (s, i)) are as follows. $x \left(i, α\right) = Rb / cos α * sin \left(π/\left(2*N\right)-invA+inv α\right)$ (Equation 6) $y \left(i, α\right) = Rb / cos α * cos \left(π/\left(2*N\right)-invA+inv α\right) + e \left(i\right)$ (Equation 7) (where 0 ≦ α ≦ arccos (Rb / Ra))

When the radius Rr of the root circle RC is larger than the radius Rb of the base circle BC, the XY coordinates of the first intersection point SP(s) are expressed as (Rr * sin (π / (2 * N) - invA + inv α 2), Rr * cos (π / (2 * N) - invA + inv α 2)). Here, Rr is a radius of a root circle RC, α2 is a parameter for defining coordinates of the first intersection point SP(s), and α2 = arccos (Rb / Rr). At this time, the range of α in (Equation 6) and (Equation 7) is arccos (Rb / Rr) ≦α ≦ arccos (Rb / Ra). In this way, each point of the model curve (curve segment) described above can be represented by respective coordinates serving as parameters in the two dimensional coordinate system (XY coordinates) that defines positions on the first plane CS1.

In step S27, the processor 10 obtains the minimum distances L(i) between the cross-sectional models M(i) (model curves MCL (s, i)) and the center positions SeP(s). That is, the error measurement method includes causing the computer 1C to obtain the minimum distances L(i) between the cross-sectional models M(i) (model curves MCL (s, i)) and the center positions SeP(s). The minimum distance L(i) is a distance between the center position SeP(s) and a proximate point that is closest to the center position SeP(s) among a plurality of points of the model curve MCL (s, i). In the calculation of the minimum distance, α (j) (j is 0 to the number of divisions - 1) obtained by dividing α of 0 ≦ α ≦ arccos (Rb / Ra) or arccos (Rb / Rr) ≦ α ≦ arccos (Rb / Ra) at equal intervals is prepared. The number of divisions is preferably 100 or more. That is, the positions of the plurality of points on the first plane CS1 are obtained by changing the parameters by equal amounts. Then, the processor 10 obtains α (j) that minimizes D (i, j) expressed by (Equation 8) as αmin, and sets the square root of D (i, j) corresponding to αmin as the minimum distance L(i). $D \left(i, j\right) = {\left\{x\left(i,α\left(j\right)\right)-x\left(s\right)\right\}}^{2} + {\left\{x\left(i,α\left(j\right)\right)-y\left(s\right)\right\}}^{2}$ (Equation 8) In step S28, the processor 10 determines whether an absolute value of the difference between the minimum distance L(i) obtained in step S27 and a radius of a tip ball 152 of the touch probe 150 is equal to or less than an allowable value. That is, in steps S27, the error measurement method includes having the computer C1 determine whether the absolute difference between the minimum distance L(i) determined in step 1C and the radius of the tip ball 152 of the touch probe 150 is less than or equal to an acceptable value. The allowable value is determined according to the required accuracy of the gear product. When the absolute value of the difference is larger than the allowable value (No in step S28), the process returns to step S25, and the candidate value e (i + 1) = e(i) + Δe (Δe is the above-described increment) is determined, and then steps S26 to S28 are repeated.

When the absolute value of the difference is equal to or less than the allowable value (Yes in step S28), and in step S29, the processor 10 determines the candidate values e(i) as the errors e. That is, the processor 10 changes the candidate value e(i), and determines, as the error e, the candidate value e(i) at which the absolute value of the difference between the minimum distance L(i) and the radius of the tip ball 152 is equal to or less than the allowable value. That is, the error measurement method changes the candidate values e(i) and causes the computer 1C to determine, as the errors e, the candidate values e(i) at which the absolute value of the difference between the minimum distance L(i) and the radius of the tip ball 152 is equal to or less than the allowable value. In this way, the error measurement method for measuring errors causes the computer 1C to calculate the errors e between the gear shape of the machined workpiece W1 and the target shape TS of the gear product based on the center position SeP(s).

### <Cooperation of Error Measurement Process and Gear Machining Process>

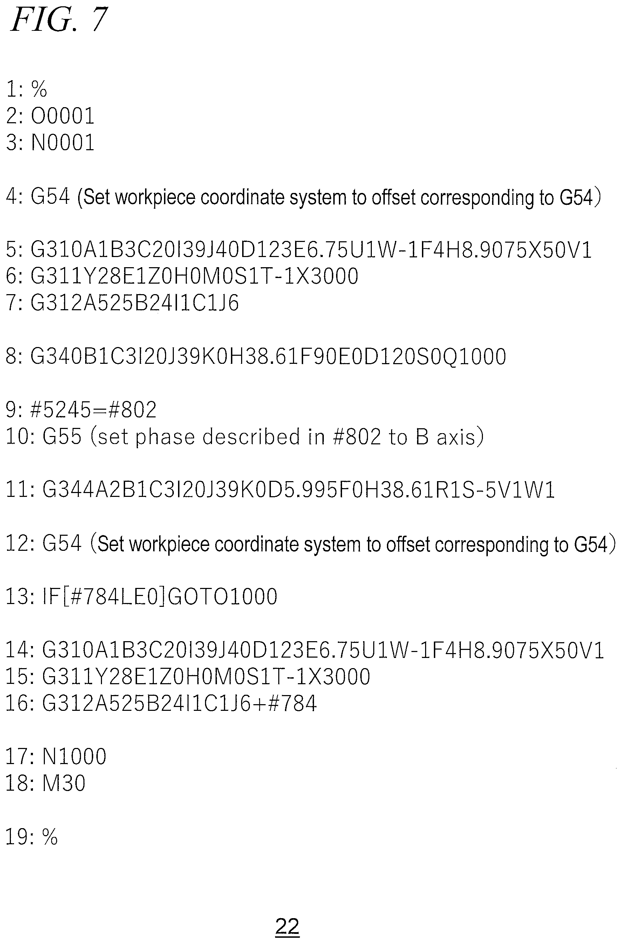

The machine tool 100 can execute both the gear machining and the error measurement process by processing the machining program 22 in which a command for performing such an error measurement process is added to a program code for machining the workpiece W into a gear shape or a gear product. FIG. 7 shows an example of such a machining program 22. In FIG. 7, "line number:" is added to the left side of the machining program 22 for convenience of reference. The machine control unit 1 analyzes the machining program 22 by executing the interpreter 26, the actuator control library 27, and the sensor processing library 28, and executes the gear manufacturing process corresponding to the command of the machining program 22. FIGS. 8 and 9 are flowcharts illustrating each operation of the gear manufacturing method according to the present embodiment, that is, the machine control unit 1 (computer 1C) performs gear manufacturing process.

In FIG. 7, line number 1 indicates the start of the program, and line number 2 indicates the program number. A sequence number used for a recursive call is described in line number 3. Line number 4 is a command to set the workpiece coordinate system to the offset specified by the G54 command.

The machine control unit 1 according to the present embodiment determines whether or not the first command is received in step S1 of FIG. 8. The first command is, for example, a combination of the G310 command to the G312 command illustrated in FIG. 7. This can be determined, for example, depending on whether or not the interpreter 26 executed by the machine control unit 1 has read the G310 command to the G312 command. The G310 command in line number 5 and G311 command in line number 6 are commands for inputting specification of hobs and operation conditions, and G312 command on line 7 is a command for inputting the machining conditions. The G311 command in line number 6 is an example of a first implement specifying command for specifying first tools (e.g., hobs, skiving cutters, and milling tools) that are held by the spindle 114 of the machine tool 100 and that can perform gear-cutting in the Y28. The first tool designated in the example of the line number 6 is a hob. The T-number related to the first tool specifying command is not limited to the T-number designating the hob, and may be a T-number designating another tool that performs gear machining.

The commands described in the line numbers 5 to 7 are examples of first commands for controlling the actuator ACT to machine the workpiece W1 into a gear shape. In the command of the line number 7, the numerical value after J represents the cutting amount in the Y-axis direction. The second command may be a command for inputting specifications, operation conditions, and machining conditions of the skiving cutter. Further, the second command may be a command for inputting a tool path or cutting conditions (such as a rotation speed and a feed rate) for machining with a mill tool. The first appliance definition command may be a separate command (for example, M60) separated from the first command.

When the first command is not received (No in step S1), the machine control unit 1 waits until the first command is received. When the first command is received (Yes in step S1), the machine control unit 1 controls the tool changer 130 such that the tool spindle 114 (tool gripper) grips the first one of the at least one tool 160 in step S2. In other words, the gear manufacturing method of the present embodiment includes controlling the tool changer 130 of the machine tool 100 by the computer 1C to make the tool spindle 114 (tool gripper) of the machine tool to hold the first tool when the computer 1C receives the first instruction.

Next, when the first command is received (Yes in step S1), the machine control unit 1 controls the actuator ACT so as to machine the workpiece W1 into a gear shape with the first tools in step S3. That is, the gear manufacturing method according to the present embodiment includes controlling the actuator ACT by the computer 1C to machine the workpiece W1 into a gear shape by the first tools when the computer 1C receives the first command.

In particular, the processor 10 controls the movement of the column 110 in the Z axis direction and the rotation of the headstock 112 about the rotation axis A1. For example, the processor 10 moves the column 110 by outputting a PWM signal to a stepping motor. Then, the processor 10 controls the movement of the headstock 112 in the Y axis direction and the movement of the column 110 in the Y axis direction and the Z axis direction so as to bring the hob cutter into contact with the outer peripheral surface of the cylindrical workpiece W1 while rotating the workpiece spindle 122 about the rotation axis A3 and rotating the tool spindle 114 about the rotation axis A2. As a result, a toothed wheel is formed in the workpiece W1.

The line number 8 in FIG. 7 is an example of a fourth command for obtaining the posture of the workpiece W1. In this example, a command G340 for measuring the phase (position on the C axis) of the midpoints CP₀ of two adjacent teeth is shown as the fourth command. The G340 command includes a fourth implement definition command for defining the touch probe 150 held by the spindle 114 of the machine tool 100 at H38.61. However, the fourth appliance specification command may be a separate command (for example, M60) separated from the fourth command. The machine control unit 1 according to the present embodiment determines whether or not the fourth command is received in step S4 of FIG. 8. When the fourth command is not received (No in step S4), the machine control unit 1 waits until the fourth command is received. When the fourth command (fourth tool-specifying command) is received (Yes in step S4), the machine control unit 1 controls the tool changer 130 to replace the tool held by the tool spindle 114 (tool gripper) with the touch probe 150 in step S5. That is, the gear-manufacturing method according to the present embodiment includes, when the computer 1C receives the fourth command, causing the touch probe 150 to control the tool changer 130 to replace the tool that is held by the tool spindle 114 (tool-gripper) of the machine tool 100 with the touch probe 150. Thereafter, the machine control unit 1 executes the process of step S18 in FIG. 4. The processing result of this command is output to the macro variable #802 of the machine control unit 1.

Line numbers 9 and 10 in FIG. 7 are examples of a fifth command for setting the coordinate systems for arranging the workpiece W1 such that the orientation of the workpiece W1 becomes a predetermined orientation or moving the touch probe 150 in correspondence with the orientation of the workpiece W1. Line number 9 in FIG. 7 indicates a command which substitutes the macro variable #802 output by the step S18 to the macro variable #5245 of the machine control unit 1. The macro variable #5245 is a variable that defines the offset of the C axis. Line number 10 in FIG. 7 is a command for setting a coordinate system (the above-described X' Y' coordinate system in which the midpoint CP₀ between two adjacent teeth is disposed so as to pass through the Y' axis) for moving the touch probe 150 by setting the value set in the macro-variable #5245 as the offset of the C axis. The fifth command may be a command to rotate the workpiece spindle 122 based on the macro-variable #802 such that the midpoint CP₀ passes through the Y' axis.

The machine control unit 1 according to the present embodiment determines whether or not the fifth command is received in step S6 of FIG. 8. When the fifth command is not received (No in step S6), the machine control unit 1 waits until the fifth command is received. When the machine control unit 1 receives the fifth command (Yes in step S6), the machine control unit 1 executes the process of step S19 in FIG. 4. That is, the gear-manufacturing method according to the present embodiment includes causing the computer 1C to control the tool changer 130 of the machine tool 100 such that the tool spindle 114 (tool gripper) of the machine tool 100 that causes the computer 1C to execute the processing of controlling the workpiece spindle 122 (workpiece-gripper) so as to rotate the workpiece W1 such that the posture of the workpiece W1 becomes a predetermined posture or set a coordinate system for moving the touch probe 150 in correspondence with the posture of the workpiece W1 holds the first tool before the touch probe 150 is brought into contact with the workpiece W1 for measuring errors.

Line number 11 in FIG. 7 indicates an example of a second command for executing the error measurement method according steps S21 to S29 in FIG 4. This example shows, as the second command, a G344 command for executing a process of inputting specifications of gears as arguments and outputting the above-described errors e as remaining margins. The G344 command further includes a second implement definition command for defining the touch probe 150 held by the spindle 114 of the machine tool 100 in H38. 61. The G344 command may also include arguments related to the approach distance L. However, the second implement prescription command may be a separate command (for example, M60) separated from the second command. In the example of FIG. 4, the second implement specifying command and the fourth implement specifying command designate the same touch probe 150, but may designate different touch probes 150.

The machine control unit 1 according to the present embodiment determines whether or not the second command is received in step S7 of FIG. 9. This determination can be made, for example, based on whether the interpreter 26 executed by the machine control unit 1 has read the second command. When the second command is not received (No in step S7), the machine control unit 1 waits until the second command is received. When the machine control unit 1 receives the second command (second tool-specifying command) (Yes in step S7), the machine control unit 1 controls the tool changer 130 to replace the tool held by the tool spindle 114 (tool gripper) with the touch probe 150 at step S8. That is, the gear manufacturing method according to the present embodiment includes, when the computer 1C receives the second command (second tool-specifying command), causing the touch probe 150 to control the tool changer 130 to replace the first tool held by the tool spindle 114 (tool gripper) of the machine tool 100 with the touch probe 150. In the example of FIG. 4, the second tool-specifying command and the fourth tool-specifying command are the same, and thus the tool replacement is not executed, but in this case, the operation of the step S5 may be regarded as the same as the operation of the step S8.

Further, when the second command is received (Yes in step S7), the machine control unit 1 executes the error measurement process related to steps S21 to S29 in FIG. 4. The machine control unit 1 outputs an output value of this process to the macro variable #784 of the machine control unit 1. As described above, the gear manufacturing method according to the present embodiment includes, when the computer 1C receives the second command, controlling the actuator ACT to move the touch probe 150 according to the error measurement process according to steps S21 to S29 in FIG. 4, and causing the computer 1C to calculate the error e between the gear shape of the workpiece W1 and the target shape TS of the gear product.

Line number 12 in FIG. 7 is a command to set the workpiece coordinate system to the offset defined by the G54 command. Line number 13 indicates that when the macro-variable #784 output by the G344 command is 0 or less, the processing jumps to the sequence numbers described in line number 20 and ends the machining program 22.

In FIG. 7, line numbers 14 and 15 are the same commands as line numbers 5 and 6. The command of line number 16 is almost the same as the command of line number 7, but is different from the command of line number 7 in that the numerical value of the macro variable #784 is added to the numerical value after J. This is a command instructing that the above-described error e be added to the cutting amount in the Y axis direction. The combination of commands described in the line numbers 14 to 16 is an example of a third command for controlling the actuator ACT to manufacture the gear product with the second tool based on the error e. The G311 command in line number 15 is an example of a third implement specifying command for specifying second tools (e.g., hobs, skiving cutters, and mill tools) that are held by the spindle 114 of the machine tool 100 and can machine gears in the Y28. In the example of FIG. 4, the third tool-specifying command and the first tool-specifying command may designate the same hob, and the first tool and the second tool are the same, but the third tool-specifying command and the first tool-specifying command are not limited to the same hob, and may designate another tool for performing gear machining.

The machine control unit 1 according to the present embodiment determines whether or not the third command is received in step S9 of FIG. 9. This can be determined, for example, depending on whether or not the interpreter 26 executed by the machine control unit 1 has read a combination of the G310 command to the G312 command. When the third command is not received (No in step S9), the machine control unit 1 waits until the third command is received. When the third command is received (Yes at step S9), the machine control unit 1 controls the tool changer 130 to change the touch probe 150 held by the tool spindle 114 (tool gripper) to a second one of the at least one tool at step S10. That is, the gear manufacturing method of manufacturing gears according to the present embodiment includes that the computer 1C controls the tool changer 130 to replace the touch probe 150 held by the tool spindle 114 (the tool gripper) with the second tool when the computer 1C receives the third command. In the example of FIG. 4, the first tool and the second tool are the same, but the first tool and the second tool may be the same tool or different tools.

Next, when the machine control unit 1 receives the third command (Yes in step S9), the machine control unit 1 controls the actuator ACT in step S11 so as to manufacture the gear product by adjusting the tool paths of the second tools based on the errors. That is, the gear manufacturing method according to the present embodiment includes, when the computer 1C receives the third command, causing the computer 1C to control the actuator ACT to adjust the tool path of the second tool based on the error and manufacture the gear product with the second tool.

### <Application to Helical Gear>

In the above example, the gear product is an involute gear and a spur gear, but the gear product may be a helical gear or a bevel gear, or the gear product may be a cycloid gear. In any of these cases, the cross-sectional model M(i) is represented as a curve represented by a parameter obtained by shifting the target curve TCL(s) in a predetermined direction, and the approach direction is determined to be the direction of the normal vector of the tangent plane TP(s) or an opposite direction to the normal vector, the tangent plane being tangent to a surface of the target shape TS at the contact target point PP(s). In any of these, if the cross-sectional model M(i), the approach direction, and the approach starting point APSP are determined, the error e can be detected by the same algorithm as that of the above embodiment, and thus the algorithm will be described.

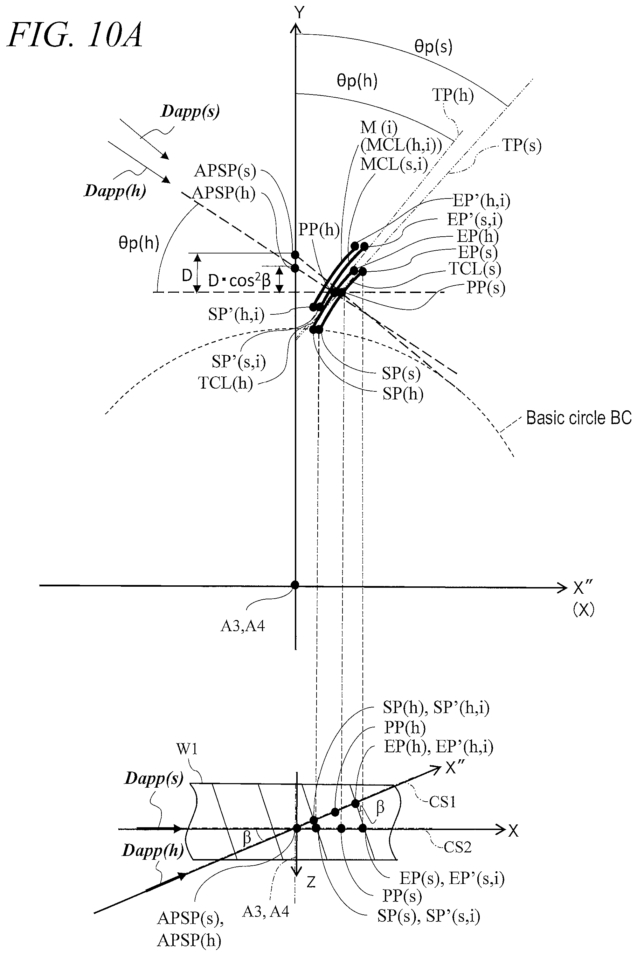

FIG. 10A schematically shows the approach starting point APSP(h) and the approach direction ***Dapp(h)*** when the gear product is a helical gear. As shown in the lower part of FIG. 10A, the helical gear is a gear whose teeth surfaces are inclined by a helix angle β with respect to the Z axis. When the helical gear is cut along a plane perpendicular to the Z axis, the outer shape of the tooth is represented by an involute curve similar to that in FIG. 6. However, the approach direction ***Dapp(h)*** in this case is a direction inclined by the torsion angle β from the X axis direction. Therefore, the X axis is rotated by the torsion angle β around the Y axis in FIG. 6X" axis, and the cross-sectional model M(i) (model curve MCL(h, i)) is expressed by an X" Y coordinates system when the cross section of the part of the workpiece W1 is taken by a plane formed by an X" axis and a Y axis.

In the FIG. 10A, a model curve MCL (s, i) in the case of spur gears is also shown for comparison. Further, the target curve on the X" Y plane is represented as TCL(h), the contact target point is represented as PP(h), the tangent plane is represented as TP(h), the first intersection point is represented as SP(h), and the second intersection point is represented as EP(h). The first end point of MCL(h, i) is denoted as SP'(h, i), and the second end point of MCL(h, i) is denoted as EP'(h, i). In this case, the X" Y plane is defined as a first plane CS1 perpendicular to the tangent plane TP(h) and containing the contact target point PP(h). The first plane CS1 is a plane obtained by rotating the second plane CS2 (XY plane) perpendicular to the gear-rotation-axis line A4 by a helix angle β defined from the tooth profile of the target shape TS around a straight line (Y axis) passing through the gear-rotation-axis line A4 on the second plane CS2. The first end point SP'(h, i) of MCL(h, i) is located at a position moved by the candidate value e(i) in the Y direction with respect to the position of the first intersection point SP(h). The second end point EP'(h, i) of MCL(h, i) is located at a position moved by the candidate value e(i) in the Y direction with respect to the position of the second intersection point EP(h).

At this time, the X" coordinate of each point of the target curve TCL(h) can be obtained by multiplying the X coordinate of each point of the target curve TCL(s) by cos β. The X" coordinate of each point of the model curve MCL(h, i) can be obtained by multiplying the X coordinate of each point of the model curve MCL(s, i) by cos β. At this time, according to (Equation 6) and (Equation 7), the XY coordinates (x (i, α), y (i, α)) of an arbitrary point of the cross-sectional model M(i) (model curve MCL(s, i)) are as follows. $x \left(i, α\right) = Rb / cos α * sin \left(π/\left(2*N\right)-invA+inv α\right) * cos β$ (Equation 9) $y \left(i, α\right) = Rb / cos α * cos \left(π/\left(2*N\right)-invA+inv α\right) + e \left(i\right)$ (Equation 10) (However, 0 ≦ α≦ arccos (Rb / Ra) (when Rb ≧ Rr), arccos (Rb / Rr) ≦ α ≦ arccos (Rb / Ra) (when Rb <Rr))

At this time, when an angle formed by a straight line where the tangent plane TP(h) and the X" Y plane intersect and the Y axis is θp(h), the following Equation is satisfied. $tan θp \left(h\right) = tan θp \left(s\right) * cos β$ (Equation 11) Since the XY coordinates of the contact target point PP(s) are expressed as (Rp * sin (π / (2 * N)), Rp * cos (π / (2 * N)), the X" Y coordinates of the contact target point PP(h) are expressed as (Rp * sin (π / (2 * N)) * cos β, Rp * cos (π / (2 * N)). A difference D between the Y coordinate of the approach starting point APSP(s) and the Y coordinate of the contact target point PP(s) is expressed by the following (Equation 12). $\begin{matrix}D = Rb / cos \left(A+π/\left(2*N\right)\right) - Rp * cos \left(π/\left(2*N\right)\right) \\ = Rp * \left\{cosA/cos \left(A+π/\left(2*N\right)\right)-cos \left(π/\left(2*N\right)\right)\right\} \\ = Rp * sin \left(π/\left(2*N\right)\right) * tanθp \left(s\right)\end{matrix}$ (Equation 12) A difference D' between the Y coordinate of the approach starting point APSP(h) and the Y coordinate of the contact target point PP(h) is expressed by the following (Equation 13). $D ′ = Rp * sin \left(π/\left(2*N\right)\right) * cos β * tanθp \left(h\right)$ (Equation 13)

From (Equation 11), (Equation 12), and (Equation 13) $D ′ = Rp * sin \left(π/\left(2*N\right)\right) * tanθp \left(s\right) * {cos}^{2} β = D * {cos}^{2} β$ (Equation 14) Thus, the Y coordinate of APSP(h) can be obtained. Further, ***Dapp(h)*** is expressed as (Rp * sin (π/(2 * N)) * cos²β, - D', Rp * sin (π/(2 * N)) * cosβ * sinβ).

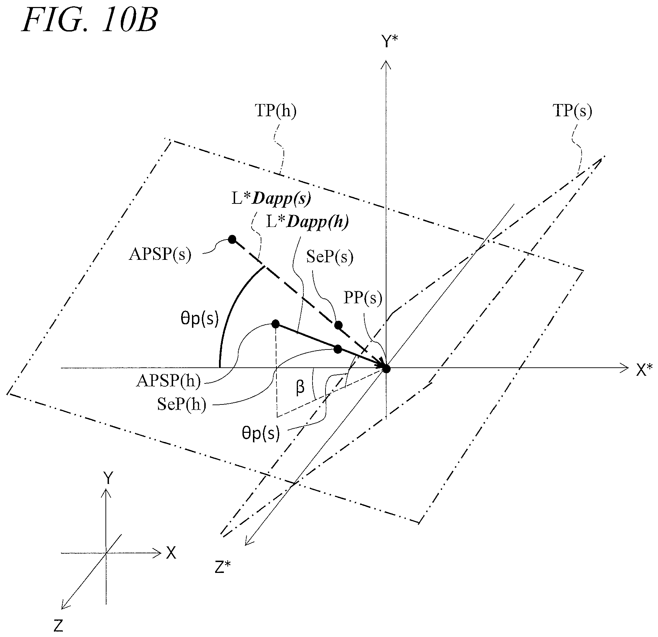

FIG.10B schematically illustrates another method of determining the approach starting point and the approach direction when the gear product is a helical gear. This is a method of obtaining the approach direction *Dapp(s)* using the approach direction *Dapp(s) =* (cosθp(s), - sinθp(s), 0) = (cos (π/(2 * N) + A), - sin (π/(2 * N) + A), 0) obtained based on the angle θ p(s) in the spur gear. Here, an axis passing through the contact target point PP(s) and parallel to the X axis is defined as an X*axis, an axis passing through the contact target point PP(s) and parallel to the Y axis is defined as a Y* axis, and an axis passing through the contact target point PP(s) and parallel to the Z axis is defined as a Z* axis. At this time, the tangent plane TP(h) of the target shape TS is the tangent plane TP(s) of the spur gear can be regarded as being rotated about the Y* axis by the torsion angle β. Thus, the approach direction *Dapp(h)* perpendicular to the tangent plane TP(h) can be obtained by rotating *Dapp(s)* about the Y* axis by the twist angle β. That is, the approach direction *Dapp(h)* is expressed by the following equation.$Dapp \left(h\right) = \left[\begin{matrix}cos β & 0 & sin β \\ 0 & 1 & 0 \\ - sin β & 0 & cos β\end{matrix}\right] \left[\begin{matrix}cos \left(\frac{π}{2 N}+A\right) \\ - sin \left(\frac{π}{2 N}+A\right) \\ 0\end{matrix}\right] = \left[\begin{matrix}cos β cos \left(\frac{π}{2 N}+A\right) \\ - sin \left(\frac{π}{2 N}+A\right) \\ - sin δ cos \left(\frac{π}{2 N}+A\right)\end{matrix}\right]$ (Equation 15)

Since ***Dapp(h)*** represented by (Equation 15) is a unit vector, when the distance between the approach starting point APSP(h) and the contact target point PP(s) is defined as an approach distance L, the approach starting point APSP(h) is a coordinate advanced by -L * ***Dapp(s)*** from the XYZ coordinate of the contact target point PP(s), and thus the XYZ coordinate (Xph, Yph, Zph) of the approach starting point APSP(h) can be determined as in the following Equation.$\left[\begin{matrix}Xph \\ Yph \\ Zph\end{matrix}\right] = \left[\begin{matrix}{R}_{p} sin \left(\frac{π}{2 N}\right) \\ {R}_{p} cos \left(\frac{π}{2 N}\right) \\ 0\end{matrix}\right] - L \left[\begin{matrix}cos β cos \left(\frac{π}{2 N}+A\right) \\ - sin \left(\frac{π}{2 N}+A\right) \\ - sin β cos \left(\frac{π}{2 N}+A\right)\end{matrix}\right] = \left[\begin{matrix}{R}_{p} sin \left(\frac{π}{2 N}\right) - L ⋅ cos β cos \left(\frac{π}{2 N}+A\right) \\ {R}_{p} cos \left(\frac{π}{2 N}\right) + L ⋅ sin \left(\frac{π}{2 N}+A\right) \\ L ⋅ sin β cos \left(\frac{π}{2 N}+A\right)\end{matrix}\right]$ (Equation 16)

### <Application in the Case of Bevel Gear>

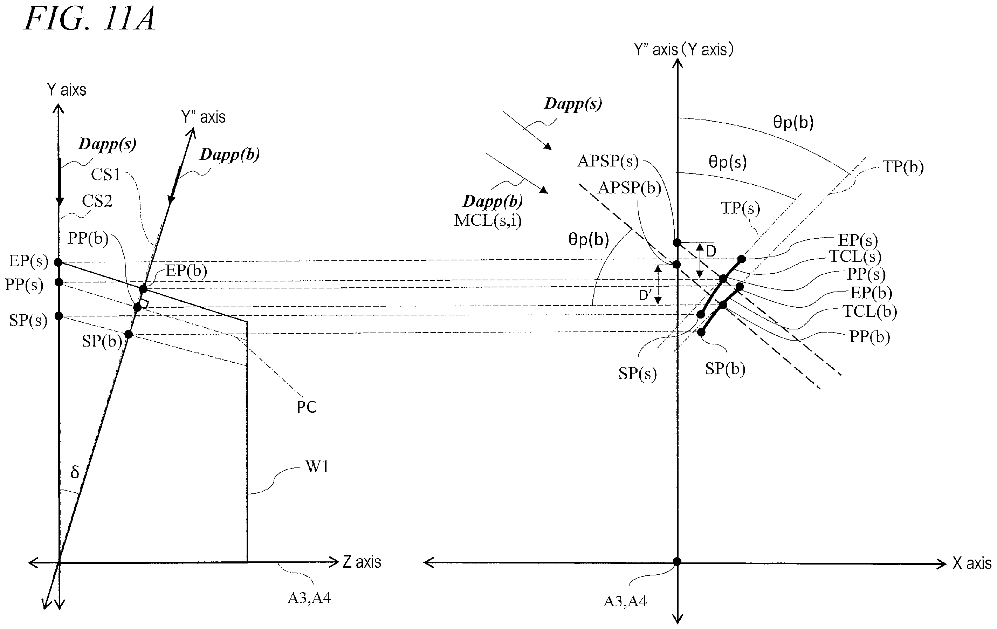

FIG. 11A is a diagram showing the approach starting point APSP(b) and the approach direction *Dapp(b)* when the gear product is a standard bevel gear. The standard bevel gear is a gear whose tooth surface is inclined by a reference conical angle δ with respect to the Y-axis, as shown in the left diagram of FIG. 11A. When a section of the standard bevel gear is taken along a plane perpendicular to the Z axis, the outer shape of the tooth is represented by an involute curve similar to that in FIG. 6. However, the approach direction ***Dapp(b)*** in this case is a direction inclined from the Y axis direction by the reference cone angle δ. Therefore, a Y" axis is newly provided by rotating the Yaxis by the reference conical angle δ about the X axis in FIG. 6, and the model curve MCL (b, i) is represented by an XY" coordinate system when a cross section of the workpiece W1 is taken along a plane formed by the X aixs and the Y" axis.

In FIG. 11A, for convenience of explanation, the model curve MCL (b, i) is not shown, and instead, the relationship between the target curve TCL(s) in the case of spur gears and the target curve TCL(b) in the case of standard bevel gears is shown. The contact target point of the standard bevel gear is denoted by PP(b), the tangent plane is denoted by TP(b), the first intersection point is denoted by SP(b), and the second intersection point is denoted by EP(b). In this case, the XY" plane is defined as the first plane CS1 perpendicular to the tangent plane TP(b) and containing the contact target point PP(b). The first plane CS1 is a plane obtained by rotating the second plane CS2 (XY plane) perpendicular to the gear-rotation-axis line A4 by a reference conical angle δ defined from the tooth profile of the target shape TS around a straight line (X axis) passing through the gear-rotation-axis line A4 on the second plane CS2. The model curve MCL (b, i) is moved from the target curve TCL(b) in the Y" direction by the candidate value e(i). That is, the position is separated by the candidate value e(i)/cos δ in the Y direction.

At this time, the Y" coordinate of each point of the target curve TCL(b) can be obtained by multiplying the Y coordinate of each point of the target curve TCL(s) by cosδ. The Y" coordinate of each point of the model curve MCL (b, i) can be obtained by multiplying the Y coordinate of each point of the model curve MCL (s, i) by cos δ. Therefore, according to (Equation 4) and (Equation 5), the XY" coordinates (x (i, α), y (i, α)) of any point on the model curve MCL (b, i) are expressed as follows. $x \left(i, α\right) = Rb / cos α * sin \left(π/\left(2*N\right)-invA+invα\right)$ (Equation 17) $y \left(i, α\right) = Rb / cos α * cos \left(π/\left(2*N\right)-invA+inv α\right) * cosδ + e \left(i\right)$ (Equation 18) (However, 0 ≦ α ≦ arccos (Rb / Ra) (when Rb ≧ Rr), arccos (Rb / Rr) ≦ α ≦ arccos (Rb / Ra) (when Rb <Rr))

At this time, when an angle formed by a straight line where the tangent plane TP(b) and the XY" plane intersect and the Y axis is θp(b), the following equation is satisfied. $Tanθp \left(b\right) = tanθp \left(s\right) / cos δ$ (Equation 19) Since the XY coordinates of the contact target point PP(s) are expressed as (Rp * sin (π/(2 * N)), Rp * cos (π/(2 * N)), the XY" coordinates of the contact target point PP(b) are expressed as (Rp * sin (π/(2 * N)), Rp * cos (π/(2 * N) * cos δ).

A difference D' between the Y" coordinate of the approach starting point APSP(b) and the Y" coordinate of the contact target point PP(b) is expressed by the following (Equation 20). $D ′ = Rp * sin \left(π/\left(2*N\right)\right) * tanθp \left(b\right)$ (Equation 20)

From (Equation 12), (Equation 19), and (Equation 20) $D ′ = Rp * sin \left(π/\left(2*N\right)\right) * tanθp \left(b\right) / cosδ = D / cos δ$ (Equation 21) Thus, the Y" coordinate of APSP(b) can be obtained, and the XYZ coordinates can be determined from the relationship between the Y" axis and the Y axis and the Z axis. The approach direction ***Dapp(b)*** is expressed as (Rp * sin(π/(2 * N)) * cos δ, - D') in the X"Y coordinate, and can be determined by converting the X"Y coordinate into the XYZ coordinate. Since the error e obtained by this method is a distance value in the Y" direction, the error in the Y direction can be obtained by multiplying the distance value by 1/cos δ.

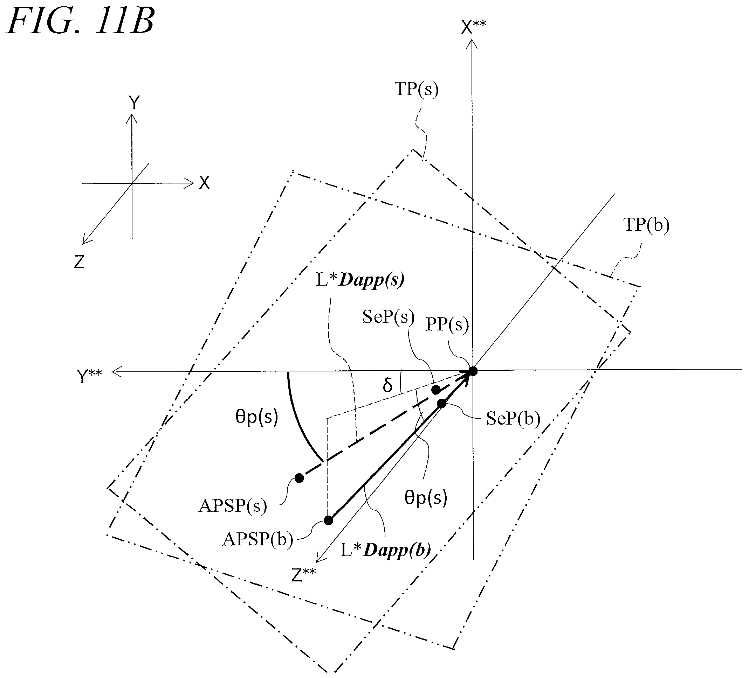

FIG. 11B shows another method of determining the approach starting point APSP and the approach direction when the gear product is a standard bevel gear. This is a method of obtaining the approach direction ***Dapp(s)*** using the approach direction ***Dapp(s)*** = (cosθp(s), - sinθp(s), 0) = (cos (π/(2 * N) + A), - sin (π/(2 * N) + A), 0) obtained based on the angle θ p(s) in the spur gear. Here, an axis passing through the contact target point PP(s) and parallel to the X axis is defined as an X** axis, an axis passing through the contact target point PP(s) and parallel to the Y axis is defined as a Y** axis, and an axis passing through the contact target point PP(s) and parallel to the Z axis is defined as a Z** axis. At this time, the tangent plane TP(b) of the target shape TS can be regarded as a tangent plane TP(s) of the spur gear rotated about the X** axis by the reference cone angle δ. Thus, the approach direction ***Dapp(b)*** perpendicular to the tangent plane TP(b) can be obtained by rotating ***Dapp(s)*** about the X** axis by the reference cone angle δ. That is, the approach direction ***Dapp(b)*** is expressed by the following equation. [Equation 22] $Dapp \left(b\right) = \left[\begin{matrix}1 & 0 & 0 \\ 0 & cos δ & sin δ \\ 0 & - sin δ & cos δ\end{matrix}\right] \left[\begin{matrix}cos \left(\frac{π}{2 N}+A\right) \\ - sin \left(\frac{π}{2 N}+A\right) \\ 0\end{matrix}\right] = \left[\begin{matrix}cos \left(\frac{π}{2 N}+A\right) \\ - cos δ sin \left(\frac{π}{2 N}+A\right) \\ - sin δ cos \left(\frac{π}{2 N}+A\right)\end{matrix}\right]$

Since ***Dapp(b)***represented by (Equation 22) is a unit vector, when the distance between the approach starting point APSP(b) and the contact target point PP(s) is set as an approach distance L, the approach starting point APSP(b) is a coordinate advanced from the XYZ coordinate of the contact target point PP(s) by - L* ***Dapp(b)***, and thus the XYZ coordinate (Xpb, Ypb, Zpb) of the approach starting point APSP(b) can be determined as in the following equation.$\left[\begin{matrix}Xpb \\ Ypb \\ Zpb\end{matrix}\right] = \left[\begin{matrix}{R}_{p} sin \left(\frac{π}{2 N}\right) \\ {R}_{p} cos \left(\frac{π}{2 N}\right) \\ 0\end{matrix}\right] - L \left[\begin{matrix}cos \left(\frac{π}{2 N}+A\right) \\ - cos δ sin \left(\frac{π}{2 N}+A\right) \\ - sin δ cos \left(\frac{π}{2 N}+A\right)\end{matrix}\right] = \left[\begin{matrix}{R}_{p} sin \left(\frac{π}{2 N}\right) - L ⋅ cos \left(\frac{π}{2 N}+A\right) \\ {R}_{p} cos \left(\frac{π}{2 N}\right) + L ⋅ cos δ sin \left(\frac{π}{2 N}+A\right) \\ L ⋅ sin δ cos \left(\frac{π}{2 N}+A\right)\end{matrix}\right]$ (Equation 23)

When the bevel gear has a helix angle, the approach starting point APSP(b), the approach direction ***Dapp(b)***, and the error e can be obtained by further applying the calculation as shown in FIG. 10.

### <Application in Case of Trochoid Gear>

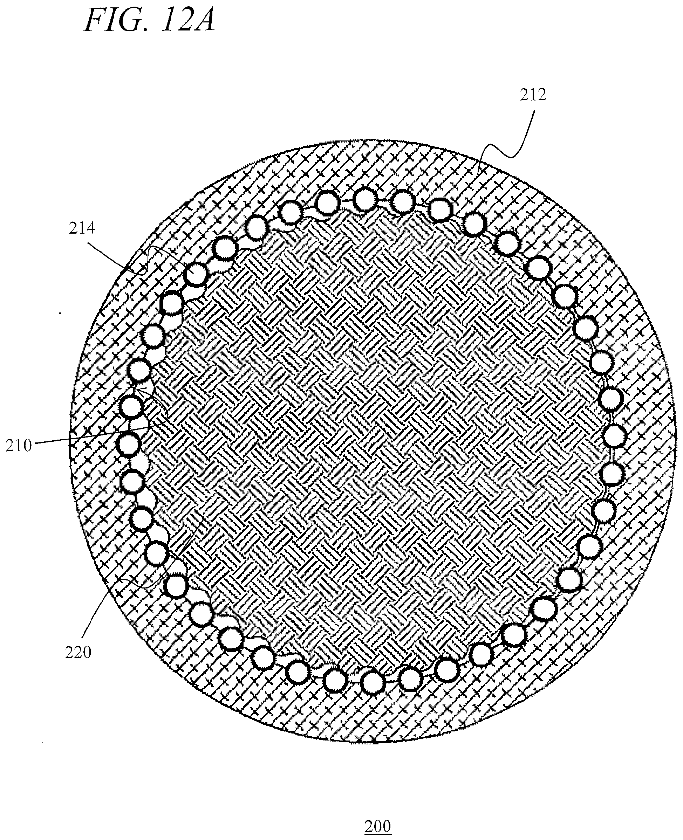

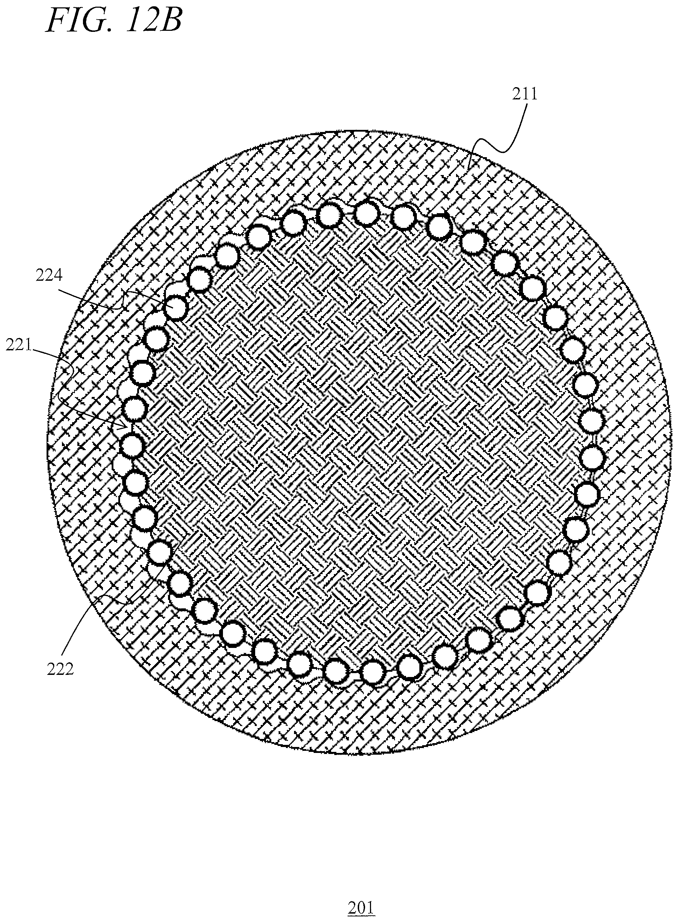

FIG.12A is a cross-sectional view of an example speed reducer 200 including trochoid gears. FIG. 12B is a cross-sectional view of another example of a speed reducer 201 including trochoid gears. The speed reducer 200 includes an internal gear 210 constituted by a plurality of internal tooth pins 214 rotatably attached to the inside of the outer cylinder 212, and an external gear 220 meshing with the internal gear 210. The speed reduction is realized by a difference between the number of the plurality of internal tooth pins 214 and the number of teeth of the external gear 220. In many cases, the number of teeth of the external gear 220 is less than the number of the plurality of internal tooth pins 214 by one. The external shape of the external gears 220 is defined by epitrochoid (epitrocoid) parallel curves. The speed reducer 201 includes an external gear 221 constituted by a plurality of external pins 224 rotatably attached to the inside of the inner cylinder 222, and an internal gear 211 that meshes with the external gear 221. The speed reduction is realized by a difference between the number of the plurality of external tooth pins 224 and the number of teeth of the internal gear 211. In many cases, the number of the plurality of external tooth pins 224 is less than the number of teeth of the internal gear 211 by one. The outer shape of the internal gears 211 is defined by a hypotrochoid parallel curve. The case of FIG.12A will be described below. The epitrochoid parallel curve of the external gears 220 as shown in FIG. 12B may be applied to the hypotrochoid parallel curve of the internal gears 211 as shown in FIG. 12A, and therefore, the description thereof will be omitted.

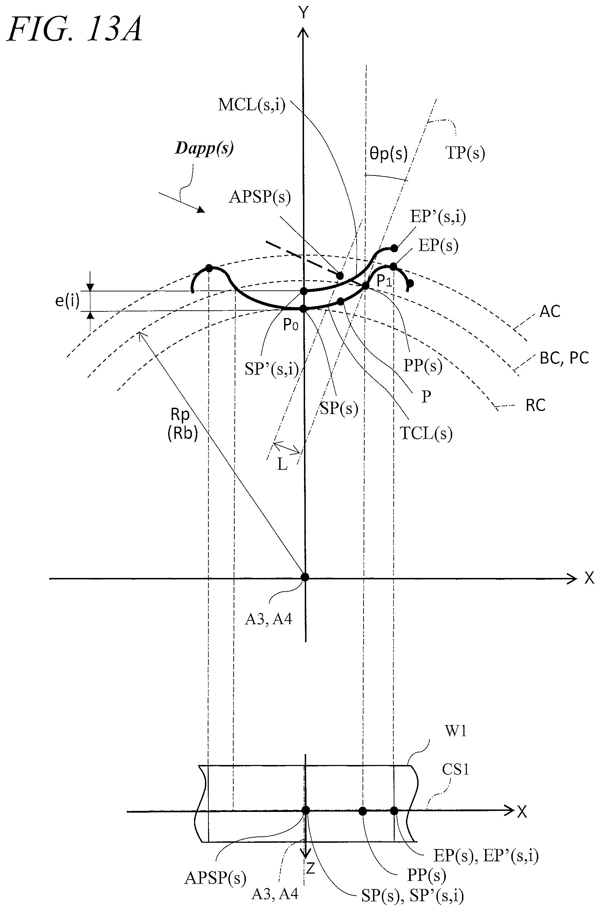

FIG. 13A is a diagram showing the approach starting point APSP(s) and the approach direction *Dapp(s)* of the external-gear product as shown in FIG. 12A. Although the example of spur gears is described in FIG. 13A, in the case of helical gears or bevel gears, the errors e can be obtained by further applying the contents described in FIGS. 10 and 11 to the present contents. The target curve of the trochoid gear described below is an example, and various other models of the target curve can be set according to the characteristics of the trochoid gear.

When the radius of the internal tooth pin 214 is R_{OP}, the XY coordinates (x, y) of the point P of the epitrochoid parallel curve are generally expressed by (Equation 24) and (Equation 25). $x = {x}_{0} + {R}_{OP} cosθ$ (Equation 24) $y = y 0 + {R}_{OP} sin θ$ (Equation 25) (x₀, y₀), cosθ, and sinθ are expressed by the following equations. ${x}_{0} = - a * sin φ + Rp * sin \left(φ/Zb\right)$ (Equation 26) ${y}_{0} = - a * cos φ + Rp * cos \left(φ/Zb\right)$ (Equation 27) [Equation 28] $cos θ = \frac{\left(1-t\right) sin φ - sin \left(\frac{φ}{Zb}\right)}{\sqrt{{t}^{2} + 4 \left(1-t\right) {\left\{sin\left(\frac{φZa}{2 Zb}\right)\right\}}^{2}}}$$sin θ = \frac{cos \left(\frac{φ}{Zb}\right) - \left(1-x\right) cos φ}{\sqrt{{t}^{2} + 4 \left(1-t\right) {\left\{sin\left(\frac{φZa}{2 Zb}\right)\right\}}^{2}}}$ (Equation 29)

Here, *ϕ* is a parameter for drawing an epitrochoid curve. Rp is the radius of the pitch circle PC (base circle BC) of the internal tooth pins 214. Zb is the number of internal tooth pins 214. One period of Φ is 2 *π* Zb. Za is the number of teeth of the external gear 8. X is a correction coefficient that defines the curvature of the epitrochoid curve. When the radius of the rolling circle in the model that draws the epitrochoid curve is R_{T}, t and a are expressed by the following equations. $t = \left({R}_{p}-{R}_{T}\right) / Rp$ (Equation 30) $a = Rp \left(1-t\right) / Zb = {R}_{T} / Zb$ (Equation 31) The larger t is, the smaller the curvature of the epitrochoid curve is, and the smaller t is, the larger the curvature of the epitrochoid curve is. Here, for example, when φ = 2n π + φ 0 (n: integer, 0 ≦ φ 0 20. That is, the same value of t is applied in a cycle of 2π. When φ is determined, t is determined from the relationship, a is determined from (Equation 31), and the XY coordinates (x, y) of P are determined based on (Equation 24) to (Equation 29).

Here, the point P₀ in FIG. 13A is obtained by setting the parameter φ to 0. The point P₀ that coincides with the first intersection point SP(s) of the target curve TCL(s) can be obtained from the values of (x, y) when the parameter φ is 0. The point P1 at which the second intersection of the target curve TCL(s) coincides with EP(h) can be obtained from the values of (x, y) when the parameter φ is π. The contact target point PP(s) can be obtained by using (x, y) at which the value of x² + y² is most approximate to Rp² as an approximate solution.

The approach direction ***Dapp(s)*** can be obtained as follows. The angle θp(s) formed by the Y axis and the straight line where the tangent plane TP(s) and the XY plane intersect is obtained by the angle formed by the Y axis and the tangent line at PP(s). That is, the inclination dy/dx of the tangent at the contact target point PP(s) can be obtained from dy/dx = (dy/dφ) / (dx/d φ). More specifically, the following equation holds.$θ p \left(s\right) = arctan \left(dx/dy\right) = arctan \left(\left(dx/dφ\right.\right)$ (Equation 32) (dx/d φ) and (dy/d φ) can be obtained using, for example, the XY coordinates of the proximity point of the contact target point PP(s) and the XY coordinates of the contact target point PP(s). The approach direction ***Dapp(s)*** can be obtained as follows. $Dapp \left(s\right) = \left(\left(dy/d φ\right),-\left(dx/d φ\right)\right)$ (Equation 33) The approach starting point APSP(s) is a distance away from the contact target point PP(s) in the approach direction ***Dapp(s)*** by the approach distance L. The approach distance L may be set according to a machining allowance or a machining error. The approach distance L may be set according to a machining allowance or a machining error.

The XY coordinates (x(i), y(i)) of the point of the model curve MCL (s, i)) are expressed as follows based on (x, y) expressed by (Equation 24) and (Equation 25) and the candidate value e(i). $x \left(i\right) = x$ (Equation 34) $y \left(i\right) = y + e \left(i\right)$ (Equation 35)

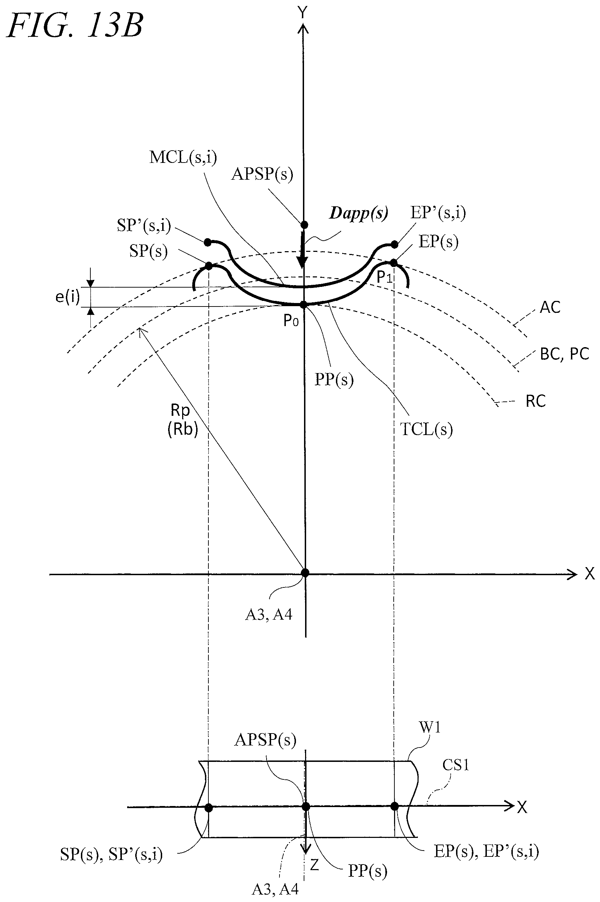

In the case of trochoid gears, a point P0 (0, Rp - R_{T} (φ = 0) / Zb, 0) obtained by setting the parameter φ to 0 can be set as the contact target point PP(s). RT (φ=0) is the radius of the rolling circle when φ is 0, and is generally a local maximum value. Therefore, the approach direction ***Dapp(s)*** is the negative direction of the Y axis. An example of such an approach starting point APSP(s) and approach direction *Dapp(s)* is shown in FIG. 13B. In this case, the first intersection point SP(s), the second intersection point EP(s) of the target curve TCL(s) is an intersection point of the target curve TCL(s) and the addendum circle AC. Similarly, the intersection point of the target curve TCL(s) and the addendum circle AC may be set as the contact target point PP(s), and the first intersection point SP(s) and the second intersection point EP(s) of the target curve TCL(s) may be set as the intersection points of the target curve TCL(s) and the root circle RC.

### <Application in Case of CycloId Gear>

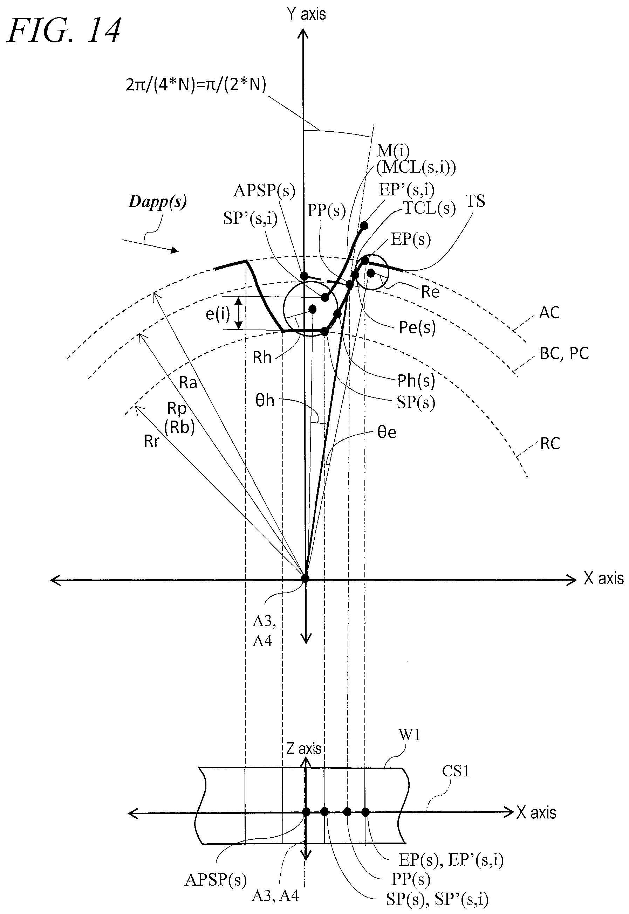

FIG. 14 is a schematic diagram showing the approach starting point APSP(s) and the approach direction *Dapp(s)* when the gear product is a cycloid gear. Although FIG. 14 illustrates an example of a spur gear, in the case of a helical gear or a bevel gear, the error e can be obtained by further applying the contents described in FIGS. 10 and 11 to the present contents.

In cycloidal gears, the pitch circle PC and the base circle BC coincide, and outside the base circle BC, the target curve TCL(s) is represented by an epicycloid, and inside the base circle BC, the target curve TCL(s) is represented by a hypocycloid. An epicycloid is represented by the locus of a point on the circle when an outer rolling circle of radius Re rolls on the base circle BC without slipping. The hypocycloid is represented by the locus of a point on the circle when an inner rolling circle of radius Rh rolls on the base circle BC without slipping.

Therefore, in the model curve MCL (s, i), the XY coordinates (x (i, θe), y (i, θe)) of an arbitrary point on the epicycloid are represented by the following matrix.$\left(\begin{matrix}x \left(i, {θ}_{e}\right) \\ y \left(i, {θ}_{e}\right)\end{matrix}\right) = \left(\begin{matrix}cos \frac{- π}{2 N} & - sin \frac{- π}{2 N} \\ sin \frac{- π}{2 N} & cos \frac{- π}{2 N}\end{matrix}\right) \left(\begin{matrix}- \left({R}_{b}+{R}_{e}\right) {sinθ}_{e} + {R}_{e} sin \left(\frac{{R}_{b} + {R}_{e}}{{R}_{e}}{θ}_{e}\right) \\ \left({R}_{b}+{R}_{e}\right) {cosθ}_{e} - {R}_{e} cos \left(\frac{{R}_{b} + {R}_{e}}{{R}_{e}}{θ}_{e}\right) + {R}_{b}\end{matrix}\right) + \left(\begin{matrix}0 \\ e \left(i\right)\end{matrix}\right)$ (Equation 36)

In the model curve MCL (s, i), the XY coordinates (x (i, θh), y (i, θh)) of an arbitrary point on the hypocycloid are represented by the following matrix.$\left(\begin{matrix}x \left(i, {θ}_{h}\right) \\ y \left(i, {θ}_{h}\right)\end{matrix}\right) = \left(\begin{matrix}cos \frac{- π}{2 N} & - sin \frac{- π}{2 N} \\ sin \frac{- π}{2 N} & cos \frac{- π}{2 N}\end{matrix}\right) \left(\begin{matrix}- \left({R}_{b}-{R}_{h}\right) {sinθ}_{h} + {R}_{h} sin \left(\frac{{R}_{b} - {R}_{h}}{{R}_{h}}{θ}_{h}\right) \\ \left({R}_{b}-{R}_{h}\right) {cosθ}_{h} - {R}_{h} cos \left(\frac{{R}_{b} - {R}_{h}}{{R}_{h}}{θ}_{h}\right) + {R}_{b}\end{matrix}\right) + \left(\begin{matrix}0 \\ e \left(i\right)\end{matrix}\right)$ (Equation 37)

Referring to FIG. 14, the X coordinate of the PP(s) is (Rb * sin (π/(2 * N)), and the Y coordinate of the PP(s) is (Rb * cos (π/(2 * N)). This point PP(s) is the contact target point PP(s) of the target shape TS. The approach direction ***Dapp(s)*** is equal to a tangential direction to the base circle BC passing through the point PP(s). When the approach starting point APSP(s) is a point on the Y axis, the Y coordinate of the approach starting point APSP(s) is expressed as Rb/cos (π/(2 * N)). The approach direction ***Dapp(s)*** is expressed as in the following (Equation 20). $Dapp \left(s\right) = \left(Rp*sin\left(π/\left(2*N\right),Rp*cos\left(π/\left(2*N\right)\right)\right.-Rb/cos\left(π/\left(2*N\right)\right),0\right)$ (Equation 38)

### <Operation and Effects of Embodiment>

The machine tool 100, the method for measuring errors, the interpreter 26 including instructions for causing the computer 1C to execute the error measurement method, the actuator control library 27, and the sensor processing library 28 according to the present embodiment estimate the errors e between the gear shape (outer peripheral face PS) of the workpiece W1 and the target shape TS of the gear product from the center position SeP(s) of the tip ball 152 of the touch probe 150 when the touch probe 150 contacts the workpiece W1, by using the cross-sectional model M(i) (model curve MCL(h, i)). Therefore, since it is not necessary to move the touch probe 150 until the touch probe 150 contacts two teeth of the gear, the gear error may be measured using the selected touch probe 150 regardless of the gear shape.

Further, the machine tool 100, the gear manufacturing method, the interpreter 26 including instructions for causing the computer 1C to execute the gear manufacturing method, the actuator control library 27, and the sensor processing library 28 according to the present embodiment can process the first command to the fifth command, and thus, by causing the machine tool 100 to read the machining program 22 including the first command to the fifth command, the machine tool 100 can be caused to automatically execute a series of operations of roughing, measurement of errors, and finishing.

### <Modified Example>

In the above-described embodiment, the case where the contact target point PP(s) is on the pitch circle PC of the gear product has been described, but the contact target point PP(s) may be another point on the target curve TCL(s). In this case, the contact target point PP(s) can be determined by using (Equation 1), (Equation 2), and the like. Further, although the model of the error e is described as a model obtained by shifting the target curve in the Y axis direction, the model curve MCL (s, i) may be generated by generating an involute curve, a trochoid parallel curve, an epicycloid curve, or a hypocycloid curve by adding an offset of the error e to the base circle radius Rb. In this case, the separating direction is not limited to a specific axial direction, and includes all radial directions with respect to the gear-rotation axis A4.

G310, G311, G312, G340, and G344 in FIG. 7 are commands for spur gears and helical gears of involute gears, but dedicated commands that can be separately applied to bevel gears, trochoid gears, and cycloid gears of involute gears may be prepared, and the interpreter 26, the actuator control library 27, and the sensor processing library 28 of the machine control unit 1 may process the dedicated commands in the same manner as parameters specific to bevel gears, trochoid gears, and cycloid gears of involute gears may be added to the G310, G311, G312, G340, G344 commands, and eval commands as arguments, such that these gears can be processed in the same manner as the spur gears and helical gears of involute gears. The first to fifth commands described above may be integrated into one command, or at least two commands may be partially integrated into one command. Specifically, the fourth command, the fifth command, and the second command may be integrated into one command.

Some or all of the functions of the logic of the interpreter 26, the actuator control library 27, and the sensor processing library 28 of the machine control unit 1 described above may be realized by a dedicated processor or an integrated circuit. The interpreter 26, the actuator control library 27, and the sensor processing library 28 described above are not limited to the memory 20 built in the machine control unit 1, and may be recorded in a storage medium that is removable from the machine control unit 1 and readable by the machine control unit 1, such as a floppy disk, an optical disk, a disk such as a CD-ROM and a magnetic disk, an SD card, a USB memory, and an external hard disk.

The workpiece gripper may be a gripper such as a vise capable of gripping the workpiece instead of the workpiece spindle 122. In this case, the machine tool 100 may be a machine tool that machines the workpiece W into a gear shape or a gear product by a mill tool.

In the above embodiment, an example is shown in which the error detection method according to FIG. 4 is implemented when a predetermined command is received by the machining program 22 in the machine tool 100, but the error detection method according to FIG. 4 may be implemented by a dedicated measurement device as shown in Japanese Patent Application Publication No. 2006-234775. In this case, the configuration of the computer 1C described above is provided in the dedicated measurement device. Further, the error detection method according to FIG. 4 may be implemented by any input by the user, not limited to the command by the machining program 22.

In this application, the terms "comprises" and "comprising" and derivatives thereof are open-ended terms that describe the presence of stated elements and do not exclude the presence of other elements not listed. This applies to "having", "including" and derivatives thereof.

The terms "member", "side", "component ", "body", and "structure" may have a plurality of meanings, such as a single portion or a plurality of portions.

The ordinal numbers such as "first" and "second" are merely terms for identifying the configuration, and do not have other meanings (for example, a specific order). For example, the presence of a "first element" does not imply the presence of a "second element," and the presence of a "second element" does not imply the presence of a "first element."

Terms of degree such as "substantially," "about," and "approximately" may mean a reasonable amount of deviation such that the end result is not significantly changed. All numerical values recited herein may be construed to include terms such as "substantially," "about," and "approximately."

The phrase "at least one of A and B" as used herein should be interpreted to include A alone, B alone, and both A and B.

Obviously, numerous modifications and variations of the present invention are possible in light of the above teachings. Thus, it is to be understood that the invention may be practiced otherwise than as specifically described herein without departing from the scope of the invention.

## Claims

1. A machine tool comprising:
a workpiece gripper configured to hold a workpiece;
a tool gripper configured to hold an implement selected from a touch probe and at least one tool;
an actuator configured to move the tool gripper relative to the workpiece gripper;
a machine control unit configured to control the tool gripper and the actuator, thereby executing an error measurement process;
the error measurement process comprising:
determining, based on a posture of the workpiece that has been processed into a gear shape and that is held in the workpiece gripper, an approach starting point and an approach direction of the touch probe that is held by the tool gripper;
controlling the actuator to move the touch probe from the approach starting point in the approach direction;
determining a center position of a tip ball of the touch probe when the touch probe is moved to contact a surface of the workpiece;
determining a candidate value of an error between the gear shape and a target shape of a gear product;
generating a cross-sectional model representing a cross-sectional shape of a tooth surface based on the candidate value, the target shape, and the posture;
obtaining a minimum distance between the cross-sectional model and the center position; and
changing the candidate value to determine, as the error, the candidate value for which an absolute value of a difference between the minimum distance and a radius of the tip ball is equal to or less than an allowable value.

2. The machine tool according to claim 1, further comprising:
a tool changer configured to replace one implement selected from the touch probe and the at least one tool held by the tool gripper with another implement.

3. The machine tool according to claim 2,
wherein the machine control unit is configured to
control the tool changer to selectively hold the touch probe, a first tool, and a second tool by the tool gripper, the at least one tool including the first tool and the second tool,
receive a first command, a second command, and a third command,
control the actuator, upon receiving the first command, to machine the workpiece into the gear shape with the first tool;
execute the error measurement process upon receiving the second command, and
control the actuator, upon receiving the third command, to adjust a tool path of the second tool based on the error to manufacture the gear product.

4. An error measurement method comprising:
causing a computer to determine an approach starting point and an approach direction of a touch probe based on a posture of a workpiece that has been machined into a gear shape;
controlling an actuator to move the touch probe from the approach starting point in the approach direction;
causing the computer to determine a center position of a tip ball of the touch probe when the touch probe is moved to contact a surface of the workpiece; and
causing the computer to calculate an error between the gear shape and a target shape of a gear product based on the center position,
wherein the causing the computer to calculate the error comprises:
determining a candidate value of the error,
generating a cross-sectional model representing a cross-sectional shape of a tooth surface based on the candidate value, the target shape, and the posture,
obtaining a minimum distance between the cross-sectional model and the center position, and
changing the candidate value to determine, as the error, the candidate value at which an absolute value of a difference between the minimum distance and a radius of the tip ball is equal to or less than an allowable value.

5. The error measurement method according to claim 4,
wherein the determining the approach starting point and the approach direction includes defining a contact target point of the target shape,
wherein the approach direction is determined to be a direction of a normal vector of a tangent plane or an opposite direction to the normal vector, the tangent plane of the target shape at the contact target point when the gear product is arranged in the posture, and
wherein the approach starting point is determined at a position directed in a direction opposite to the approach direction from the contact target point.

6. The error measurement method according to claim 5:
wherein a first plane that is perpendicular to the tangent plane and that includes the contact target point is defined,
wherein a gear-rotation axis when the gear product is disposed in the posture is defined,
and
wherein the cross-sectional model is represented by a model curve obtained by shifting, in a separating direction away from the gear-rotation axis on the first plane, a target curve that passes through the contact target point among a plurality of curves represented by intersecting the target shape with the first plane.

7. The error measurement method according to claim 6,
wherein the first plane is a plane obtained by rotating a second plane that is perpendicular to the gear-rotation axis about the gear-rotation axis or a straight line passing through the contact target point on the second plane by a helix angle defined from the tooth profile of the target shape.

8. The error measurement method according to claim 6 or 7,
wherein the minimum distance is a distance between the center position and a proximate point that is closest to the center position among a plurality of points of the model curve.

9. The error measurement method according to any one of claims 6 to 8,
wherein the model curve is a curve segment obtained by shifting a curve segment which is a segment of the target curve between a first intersection point and a second intersection point by the candidate value in the separation direction, the first intersection point being an intersection point between the target curve and either a root circle or a base circle of the target shape centered on the gear rotation axis, the second intersection point being an intersection point between the target curve and an addendum circle of the target shape centered on the gear rotation axis.

10. The error measurement method according to any one of claims 6 to 9,
wherein the model curve is represented by respective coordinates serving as parameters in a two dimensional coordinate system that defines positions on the first plane, and
wherein the positions of the plurality of points on the first plane are obtained by changing the parameters by equal amounts.

11. The error measurement method according to any one of claims 4 to 10, further comprising:
arranging the workpiece, before the touch probe is brought into contact with the workpiece, such that the posture of the workpiece becomes a predetermined posture; or
setting a coordinate system for moving the touch probe in accordance with the posture of the workpiece.

12. A gear manufacturing method, comprising:
causing the computer according to any of claims 4 to 11, when the computer receives a first command, to control the actuator to machine the workpiece into the gear shape with a first tool held in a tool gripper of a machine tool;
causing the computer, when the computer receives a second command, to control the actuator to move the touch probe to calculate the error according to the error measurement method of any of claims 4 to 11; and
causing the computer, when the computer receives a third command, to control the actuator to adjust a tool path of a second tool held by the tool gripper based on the error, such that the gear product is manufactured by the second tool.

13. A gear measuring device comprising a computer configured to execute the error measurement method according to any of claims 4 to 11.

14. A computer program comprising instructions which, when executed by a computer, cause the computer to carry out the error measurement method according to any of claims 4 to 11.

15. A computer program comprising instructions which, when executed by a computer, cause the computer to carry out the gear manufacturing method according to claim 12.
